(19) Europäisches Patentamt / European Patent Office / Office européen des brevets

(11) **EP 3 584 988 B1**

(12) **EUROPEAN PATENT SPECIFICATION**

(45) Date of publication and mention
of the grant of the patent:
**30.03.2022 Bulletin 2022/13**

(21) Application number: **18754052.1**

(22) Date of filing: **19.02.2018**

(51) International Patent Classification (IPC):
*H04L 5/00* $^{(2006.01)}$    *H04L 5/14* $^{(2006.01)}$

(52) Cooperative Patent Classification (CPC):
**H04L 5/0044; H04L 5/0092;** H04L 5/1469

(86) International application number:
**PCT/KR2018/002016**

(87) International publication number:
**WO 2018/151565 (23.08.2018 Gazette 2018/34)**

(54) **SIGNAL TRANSMISSION/RECEPTION METHOD BETWEEN TERMINAL AND BASE STATION IN WIRELESS COMMUNICATION SYSTEM SUPPORTING NARROWBAND INTERNET OF THINGS, AND DEVICE SUPPORTING SAME**

SIGNALSENDE-/-EMPFANGSVERFAHREN ZWISCHEN ENDGERÄT UND BASISSTATION IN EINEM DRAHTLOSKOMMUNIKATIONSSYSTEM MIT UNTERSTÜTZUNG VON SCHMALBANDIGEM INTERNET DER DINGE UND VORRICHTUNG ZUR UNTERSTÜTZUNG DAVON

PROCÉDÉ D'ÉMISSION/RÉCEPTION DE SIGNAUX ENTRE TERMINAL ET STATION DE BASE DANS UN SYSTÈME DE COMMUNICATION SANS FIL PRENANT EN CHARGE L'INTERNET DES OBJETS EN BANDE ÉTROITE, ET DISPOSITIF LE PRENANT EN CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2017 US 201762459545 P**
**06.07.2017 US 201762529418 P**

(43) Date of publication of application:
**25.12.2019 Bulletin 2019/52**

(73) Proprietor: **LG Electronics Inc.**
**Seoul 07336 (KR)**

(72) Inventors:
• **PARK, Changhwan**
  **Seoul 06772 (KR)**
• **KIM, Seonwook**
  **Seoul 06772 (KR)**
• **AHN, Joonkui**
  **Seoul 06772 (KR)**
• **HWANG, Seunggye**
  **Seoul 06772 (KR)**
• **YOON, Sukhyon**
  **Seoul 06772 (KR)**

(74) Representative: **Katérle, Axel**
**Wuesthoff & Wuesthoff**
**Patentanwälte PartG mbB**
**Schweigerstraße 2**
**81541 München (DE)**

(56) References cited:
**WO-A1-2016/131352**    **WO-A1-2016/199989**
**WO-A1-2016/208897**    **US-A1- 2013 136 028**

• **SEQUANS COMMUNICATIONS: "Cell range extension", 3GPP DRAFT; R1-1702118 - CELL RANGE EXTENSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 6 February 2017 (2017-02-06), XP051220314, Retrieved from the Internet: URL:http://www.3gpp.org/ftp/tsg_ran/WG1_RL 1/TSGR1_88/Docs/ [retrieved on 2017-02-06]**

     **(Cont. next page)**

- PANASONIC: "Clarification of antenna port usage of NB-IoT", 3GPP DRAFT; R1-164917 QCL NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051090212, Retrieved from the Internet: URL:http://www.3gpp.org/ftp/tsg_ran/WG1_RL 1/TSGR1_85/Docs/ [retrieved on 2016-05-13]
- FUJITSU: "Guard Period Setting in TDD Based NR Frame Structure", R1-1611459, 3GPP TSG RAN WG1 Meeting #87, 4 November 2016 (2016-11-04), XP051189072, Reno, USA
- NEC: "Remaining Issues on Mixed Numerology in a Single Carrier", R1-1611715, 3GPP TSG RAN WGI Meeting #87, 4 November 2016 (2016-11-04), XP051189147, Reno, U SA

## Description

[Technical Field]

The following description relates to a wireless communication system, and more particularly, to a signal transmission/reception method between a terminal and a base station in a wireless communication system supporting Narrowband Internet of Things (NB-IoT), and devices supporting the same.

More specifically, in the following description includes description of a method of transmitting and receiving signals between a terminal and a base station when a wireless communication system supporting the Narrowband Internet of Things (NB-IoT) is a time division duplex (TDD) system.

[Background Art]

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In particular, Internet of Things (IoT) communication technology is newly proposed. Here, IoT refers to communication that does not involve human interaction. A way to introduce such IoT communication technology in a cellular-based LTE system is further under discussion.

The conventional Long Term Evolution (LTE) system has been designed to support high-speed data communication and thus has been regarded as an expensive communication technology for people.

However, IoT communication technology can be widely used only if the cost is reduced.

There have been discussions about reducing the bandwidth as a way to reduce cost. However, to reduce the bandwidth, a new frame structure should be designed in the time domain, and the issue of interference with the existing neighboring LTE terminals should also be considered.

The 3GPP Draft No. R1-1702118, entitled "Cell range extension", discusses the need to change the GP in TDD in the context of coverage extended user equipment.

WO 2016/131352 A1 describes a data transmission method for a TDD system, including steps of: at a predetermined retuning start time point, adjusting, by a UE, a carrier frequency for data reception and transmission within a predetermined retuning duration so as to acquire the adjusted carrier frequency; and performing, by the UE, uplink data transmission and downlink data reception at the adjusted carrier frequency with a network device within a consecutive duration in accordance with a TDD uplink-downlink configuration, the consecutive duration being a duration from a current retuning end time point to a next retuning start time point.

The 3GPP Draft No. R1-164917, entitled "Clarification of antenna port usage of NB-IoT", discusses antenna port usage and corresponding quasi co-location of NB-IoT.

[Disclosure]

[Technical Problem]

An object of the present invention is to provide a method for transmitting/receiving a signal between a terminal and a base station in a wireless communication system supporting narrowband Internet of Things.

In particular, an object of the present invention is to provide a method for transmitting and receiving signals between a terminal and a base station in an optimized manner when the wireless communication system is a TDD system.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

The present invention provides a method and devices for transmitting and receiving signals between a terminal and a base station in a wireless communication system supporting narrowband Internet or Things, and devices therefor.

In one aspect of the present invention, provided herein is a method of transmitting and receiving, by a terminal, signals to and from a base station in a wireless communication system supporting Narrow Band Internet of Things (NB-IoT), the method including receiving first allocation information indicating a first downlink region, a guard period (GP)

3

and a first uplink region for a first time interval, receiving second allocation information indicating one or more of a second downlink region or a second uplink region additionally allocated in the GP, and performing signal transmission and reception with the base station in the first time interval according to characteristics of the terminal, using only the first downlink region and the first uplink region or using the first downlink region, the first uplink region, and the one or more of the second downlink region or the second uplink region indicated by the second allocation information.

In another aspect of the present invention, provided herein is a method of transmitting and receiving, by a base station, signals to and from a terminal in a wireless communication system supporting Narrow Band Internet of Things (NB-IoT), the method including transmitting first allocation information indicating a first downlink region, a guard period (GP) and a first uplink region for a first time interval, transmitting second allocation information indicating one or more of a second downlink region or a second uplink region additionally allocated in the GP, and performing signal transmission and reception with the terminal in the first time interval according to characteristics of the terminal, using only the first downlink region and the first uplink region or using the first downlink region, the first uplink region, and the one or more of the second downlink region or the second uplink region indicated by the second allocation information.

In another aspect of the present invention, provided herein is a terminal for transmitting and receiving signals to and from a base station in a wireless communication system supporting Narrow Band Internet of Things (NB-IoT), the terminal including a transmitter, a receiver, and a processor operatively coupled to the transmitter and the receiver, wherein the processor is configured to receive first allocation information indicating a first downlink region, a guard period (GP) and a first uplink region for a first time interval, receive second allocation information indicating one or more of a second downlink region or a second uplink region additionally allocated in the GP, and perform signal transmission and reception with the base station in the first time interval according to characteristics of the terminal, using only the first downlink region and the first uplink region or using the first downlink region, the first uplink region, and the one or more of the second downlink region or the second uplink region indicated by the second allocation information.

In another aspect of the present invention, provided herein is a base station for transmitting and receiving signals to and from a terminal in a wireless communication system supporting Narrow Band Internet of Things (NB-IoT), the base station including a transmitter, a receiver, and a processor operatively coupled to the transmitter and the receiver, wherein the processor is configured to transmit first allocation information indicating a first downlink region, a guard period (GP) and a first uplink region for a first time interval, transmit second allocation information indicating one or more of a second downlink region or a second uplink region additionally allocated in the GP, and perform signal transmission and reception with the terminal in the first time interval according to characteristics of the terminal, using only the first downlink region and the first uplink region or using the first downlink region, the first uplink region, and the one or more of the second downlink region or the second uplink region indicated by the second allocation information.

In the above-described configuration, the characteristics of the terminal may include whether the terminal is an NB-IoT terminal.

Alternatively, the characteristics of the terminal may include a coverage enhancement (CE) mode of the terminal or a CE level of the terminal.

In one embodiment of the present invention, the first time interval may correspond to one subframe.

In the above-described configuration, the first allocation information may include configuration information about the first time interval and information indicating the number of additional symbols for the first uplink region.

In addition, the second allocation information may include one or more of the number of downlink symbols additionally allocated in the GP or the number of uplink symbols additionally allocated in the GP.

In particular, in the above-described configuration, a time interval except for a resource region additionally allocated in the GP by the second allocation information may be at least 20 microseconds or more.

In addition, when the second allocation information indicates the second downlink region additionally allocated in the GP, the terminal may receive, through the second downlink region, a narrow physical downlink shared channel (NPDSCH) or a reference signal having a quasi-co-located (QCL) relationship with a reference signal transmitted in the first downlink region.

When the second allocation information indicates the second downlink region additionally allocated in the GP, the terminal may transmit, through the second uplink region, a narrow physical uplink shared channel (NPUSCH) or a reference signal having a quasi-co-located (QCL) relationship with a reference signal transmitted in the first uplink region.

In the above-described configuration, the second downlink region may be configured with the same cyclic prefix (CP) as the first downlink region, wherein the second uplink region may be configured with the same CP as the first uplink region.

It is to be understood that both the foregoing general description and the following detailed description of the present disclosure are exemplary and explanatory and are intended to provide further explanation of the disclosure as claimed.

[Advantageous Effects]

As is apparent from the above description, the embodiments of the present invention have the following effects.

According to the present invention, a terminal and a base station may flexibly utilize resources for signal transmission/reception between the terminal and the base station according to a situation.

In particular, an NB-IoT terminal transmits/receives signals through a relatively small resource region (e.g., one resource block), and accordingly it is necessary to allocate as many resources as possible for smooth signal transmission/reception. According to the present invention, to address this issue, the NB-IoT terminal and the base station may transmit/receive signals through more resources than in conventional cases.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings. In other words, unintended effects according to implementation of the present invention may also be obtained by those skilled in the art from the embodiments of the present invention.

[Description of Drawings]

The accompanying drawings, which are included to provide a further understanding of the invention, provide embodiments of the present invention together with detail explanation. Yet, a technical characteristic of the present invention is not limited to a specific drawing. Characteristics disclosed in each of the drawings are combined with each other to configure a new embodiment. Reference numerals in each drawing correspond to structural elements.

FIG. 1 is a diagram illustrating physical channels and a signal transmission method using the physical channels;

FIG. 2 is a diagram illustrating exemplary radio frame structures;

FIG. 3 is a diagram illustrating an exemplary resource grid for the duration of a downlink slot;

FIG. 4 is a diagram illustrating an exemplary structure of an uplink subframe;

FIG. 5 is a diagram illustrating an exemplary structure of a downlink subframe;

FIG. 6 is a diagram illustrating a self-contained subframe structure applicable to the present invention;

FIGs. 7 and 8 are diagrams illustrating representative methods for connecting TXRUs to antenna elements;

FIG. 9 is a diagram schematically illustrating an exemplary hybrid beamforming structure from the perspective of transceiver units (TXRUs) and physical antennas according to the present invention;

FIG. 10 is a diagram schematically illustrating an exemplary beam sweeping operation for a synchronization signal and system information in a downlink (DL) transmission procedure according to the present invention;

FIG. 11 is a diagram schematically illustrating arrangement of an in-band anchor carrier for an LTE bandwidth of 10 MHz;

FIG. 12 is a diagram schematically illustrating positions where a physical downlink channel and a downlink signal are transmitted in an FDD LTE system;

FIG. 13 is a diagram illustrating exemplary resource allocation of an NB-IoT signal and an LTE signal in an in-band mode;

FIGs. 14 to 17 are diagrams illustrating various examples of special sub-frame configuration;

FIG. 18 is a diagram illustrating subframe configuration and the meaning of notations according to the CP length in FIGs. 14 to 17;

FIG. 19 is a diagram showing a common legend applied to FIGs. 20 to 31 for description of the present invention;

FIGs 20 to 31 are diagrams illustrating an example according to a special subframe configuration proposed in the present invention;

FIG. 32 is a diagram schematically illustrating configuration of eDwPTS and eUpPTS according to the example of FIG. 22;

FIG. 33 is a diagram schematically illustrating a method of transmitting and receiving signals between a terminal and a base station according to the present invention; and

FIG. 34 is a diagram illustrating configuration of a terminal and a base station in which the proposed embodiments can be implemented.

[Best Mode]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the attached drawings, a detailed description of known procedures or steps of the present disclosure will be avoided lest it should obscure the subject matter of the present disclosure. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), gNode B (gNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmission end is a fixed and/or mobile node that provides a data service or a voice service and a reception end is a fixed and/or mobile node that receives a data service or a voice service. Therefore, a UE may serve as a transmission end and a BS may serve as a reception end, on an UpLink (UL). Likewise, the UE may serve as a reception end and the BS may serve as a transmission end, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5G NR system and a 3GPP2 system. In particular, the embodiments of the present disclosure may be supported by the standard specifications, 3GPP TS 36.211, 3GPP TS 36.212, 3GPP TS 36.213, 3GPP TS 36.321, 3GPP TS 36.331, 3GPP TS 38.211, 3GPP TS 38.212, 3GPP TS 38.213, 3GPP TS 38.321 and 3GPP TS 38.331. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure.

For example, the term, TxOP may be used interchangeably with transmission period or Reserved Resource Period (RRP) in the same sense. Further, a Listen-Before-Talk (LBT) procedure may be performed for the same purpose as a carrier sensing procedure for determining whether a channel state is idle or busy, CCA (Clear Channel Assessment), CAP (Channel Access Procedure).

Hereinafter, 3GPP LTE/LTE-A systems are explained, which are examples of wireless access systems.

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present disclosure are described in the context of a 3GPP LTE/LTE-A system in order to clarify the technical features of the present disclosure, the present disclosure is also applicable to an IEEE 802.16e/m system, etc.

### 1. 3GPP LTE/LTE-A System

#### 1.1. Physical Channels and Signal Transmission and Reception Method Using the Same

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

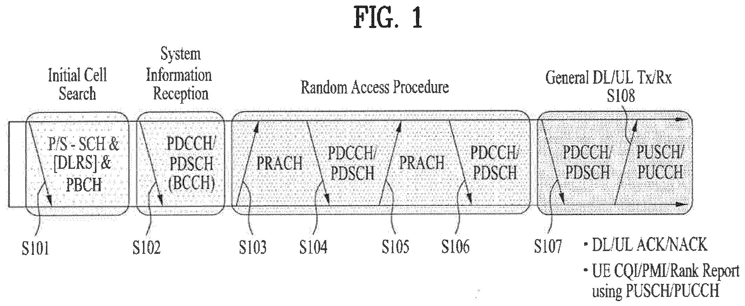

FIG. 1 illustrates physical channels and a general signal transmission method using the physical channels, which may be used in embodiments of the present disclosure.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

#### 1.2. Resource Structure

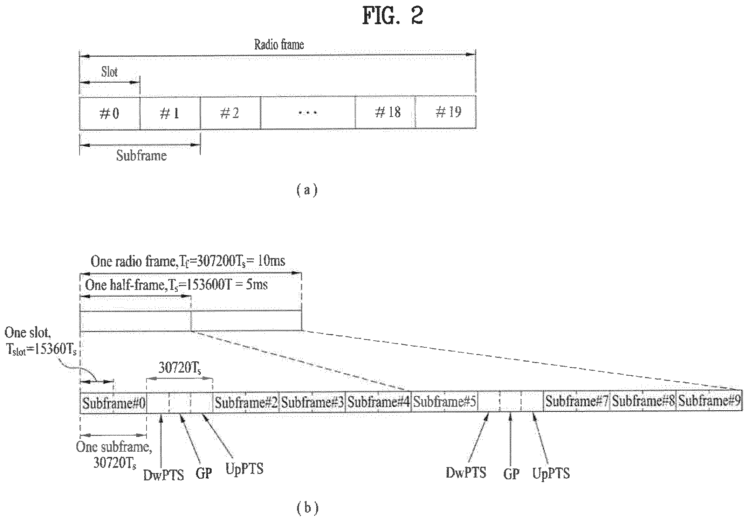

FIG. 2 illustrates exemplary radio frame structures used in embodiments of the present disclosure.

FIG. 2(a) illustrates frame structure type 1. Frame structure type 1 is applicable to both a full Frequency Division Duplex (FDD) system and a half FDD system.

One radio frame is 10ms ($T_f=307200·T_s$) long, including equal-sized 20 slots indexed from 0 to 19. Each slot is 0.5ms ($T_{slot}=15360·T_s$) long. One subframe includes two successive slots. An ith subframe includes 2ith and (2i+I)th slots. That is, a radio frame includes 10 subframes. A time required for transmitting one subframe is defined as a Transmission Time Interval (TTI). $T_s$ is a sampling time given as $T_s=1/(15kHz×2048)=3.2552×10^{-8}$ (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms (Tf=307200·Ts) long, including two half-frames each having a length of 5ms (=153600·Ts) long. Each half-frame includes five subframes each being 1ms (=30720·Ts) long. An ith subframe includes 2ith and (2i+1)th slots each having a length of 0.5ms (Tslot=15360·Ts). Ts is a sampling time given as Ts=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

Table 1 below lists special subframe configurations (DwPTS/GP/UpPTS lengths).

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix In uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

In addition, in the LTE Rel-13 system, it is possible to newly configure the configuration of special subframes (i.e., the lengths of DwPTS/GP/UpPTS) by considering the number of additional SC-FDMA symbols, X, which is provided by the higher layer parameter named "srs-UpPtsAdd" (if this parameter is not configured, X is set to 0). In the LTE Rel-14 system, specific subframe configuration #10 is newly added. The UE is not expected to be configured with 2 additional UpPTS SC-FDMA symbols for special subframe configurations {3, 4, 7, 8} for normal cyclic prefix in downlink and special subframe configurations {2, 3, 5, 6} for extended cyclic prefix in downlink and 4 additional UpPTS SC-FDMA symbols for special subframe configurations {1, 2, 3, 4, 6, 7, 8} for normal cyclic prefix in downlink and special subframe configurations {1, 2, 3, 5, 6} for extended cyclic prefix in downlink.

[Table 2]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $(1+X) \cdot 2192 \cdot T_s$ | $(1+X) \cdot 2560 \cdot T_s$ | $7680 \cdot T_s$ | $(1+X) \cdot 2192 \cdot T_s$ | $(1+X) \cdot 2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | $(2+X) \cdot 2192 \cdot T_s$ | $(2+X) \cdot 2560 \cdot T_s$ | $7680 \cdot T_s$ | $(2+X) \cdot 2192 \cdot T_s$ | $(2+X) \cdot 2560 \cdot T_s$ |
| 5 | $6592 \cdot T_s$ | | | $20480 \cdot T_s$ | | |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |
| 10 | $13169 \cdot T_s$ | $13152 \cdot T_s$ | $12900 \cdot T_s$ | - | - | - |

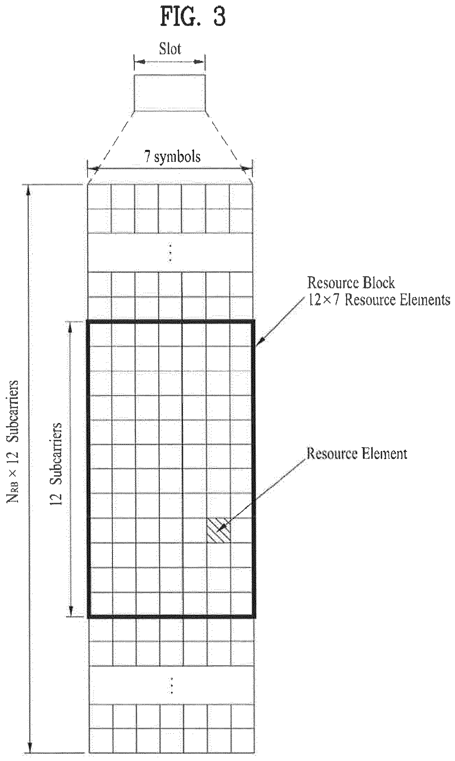

FIG. 3 illustrates an exemplary structure of a DL resource grid for the duration of one DL slot, which may be used in embodiments of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth.

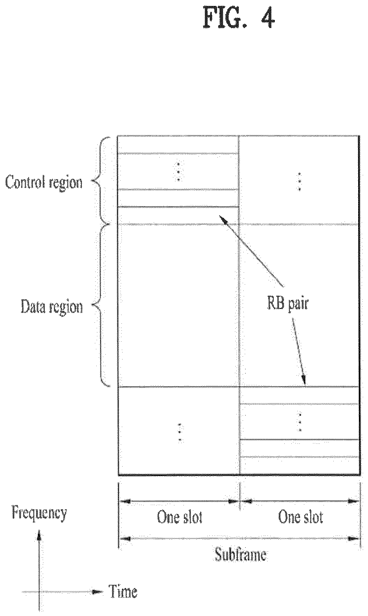

FIG. 4 illustrates a structure of a UL subframe which may be used in embodiments of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

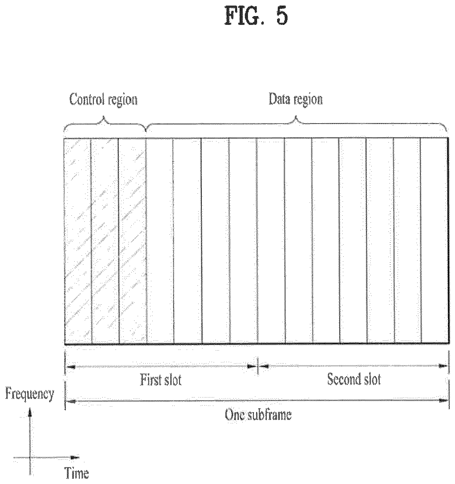

FIG. 5 illustrates a structure of a DL subframe that may be used in embodiments of the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e., the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

## 2. New Radio Access Technology System

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has also been required. Moreover, a communication system design capable of supporting services/UEs sensitive to reliability and latency has been proposed.

As the new RAT considering the enhanced mobile broadband communication, massive MTC, Ultra-reliable and low latency communication (URLLC), and the like, a new RAT system has been proposed. In the present invention, the corresponding technology is referred to as the new RAT or new radio (NR) for convenience of description.

### 2.1. Numerologies

The NR system to which the present invention is applicable supports various OFDM numerologies shown in the following table. In this case, the value of $\mu$ and cyclic prefix information per carrier bandwidth part can be signaled in DL and UL, respectively. For example, the value of $\mu$ and cyclic prefix information per downlink carrier bandwidth part may be signaled though DL-BWP-mu and DL-MWP-cp corresponding to higher layer signaling. As another example, the value of $\mu$ and cyclic prefix information per uplink carrier bandwidth part may be signaled though UL-BWP-mu and UL-MWP-cp corresponding to higher layer signaling.

[Table 3]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

### 2.2 Frame Structure

DL and UL transmission are configured with frames with a length of 10 ms. Each frame may be composed of ten subframes, each having a length of 1 ms. In this case, the number of consecutive OFDM symbols in each subframe is $N_{\text{symb}}^{\text{subframe}\mu} = N_{\text{symb}}^{\text{slot}} N_{\text{slot}}^{\text{subframe}\mu}$.

In addition, each subframe may be composed of two half-frames with the same size. In this case, the two half-frames are composed of subframes 0 to 4 and subframes 5 to 9, respectively.

Regarding the subcarrier spacing $\mu$, slots may be numbered within one subframe in ascending order like $n_s^{\mu} \in \left\{ 0, \ldots, N_{\text{slot}}^{\text{subframe}, \mu} - 1 \right\}$ and may also be numbered within a frame in ascending order like $n_{s,f}^{\mu} \in \left\{ 0, \ldots, N_{\text{slot}}^{\text{frame}, \mu} - 1 \right\}$. In this case, the number of consecutive OFDM symbols in one slot ($N_{\text{symb}}^{\text{slot}}$) may be determined as shown in the following table according to the cyclic prefix. The start slot ($n_s^{\mu}$) of one subframe is aligned with the start OFDM symbol ($n_s^{\mu} N_{\text{symb}}^{\text{slot}}$) of the same subframe in the time dimension. Table 4 shows the number of OFDM symbols in each slot/frame/subframe in the case of the normal cyclic prefix, and Table 5 shows the number of OFDM symbols in each slot/frame/subframe in the case of the extended cyclic prefix.

[Table 4]

| $\mu$ | $N_{\text{symb}}^{\text{slot}}$ | $N_{\text{slot}}^{\text{frame}\mu}$ | $N_{\text{slot}}^{\text{subframe}\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 4 | 14 | 160 | 16 |
| 5 | 14 | 320 | 32 |

[Table 5]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the NR system to which the present invention can be applied, a self-contained slot structure can be applied based on the above-described slot structure.

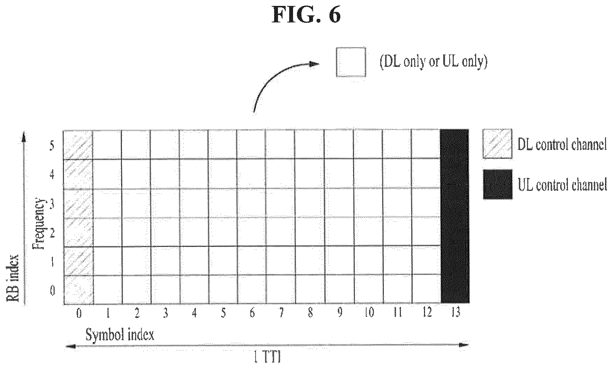

FIG. 6 is a diagram illustrating a self-contained slot structure applicable to the present invention.

In FIG. 6, the hatched area (e.g., symbol index = 0) indicates a downlink control region, and the black area (e.g., symbol index = 13) indicates an uplink control region. The remaining area (e.g., symbol index = 1 to 13) can be used for DL or UL data transmission.

Based on this structure, the eNB and UE can sequentially perform DL transmission and UL transmission in one slot. That is, the eNB and UE can transmit and receive not only DL data but also UL ACK/NACK in response to the DL data in one slot. Consequently, due to such a structure, it is possible to reduce a time required until data retransmission in case a data transmission error occurs, thereby minimizing the latency of the final data transmission.

In this self-contained slot structure, a predetermined length of a time gap is required for the process of allowing the eNB and UE to switch from transmission mode to reception mode and vice versa. To this end, in the self-contained slot structure, some OFDM symbols at the time of switching from DL to UL are set as a guard period (GP).

Although it is described that the self-contained slot structure includes both the DL and UL control regions, these control regions can be selectively included in the self-contained slot structure. In other words, the self-contained slot structure according to the present invention may include either the DL control region or the UL control region as well as both the DL and UL control regions as shown in FIG. 6.

In addition, for example, the slot may have various slot formats. In this case, OFDM symbols in each slot can be divided into downlink symbols (denoted by 'D'), flexible symbols (denoted by 'X'), and uplink symbols (denoted by 'U').

Thus, the UE can assume that DL transmission occurs only in symbols denoted by 'D' and 'X' in the DL slot. Similarly, the UE can assume that UL transmission occurs only in symbols denoted by 'U' and 'X' in the UL slot.

### 2.3. Analog Beamforming

In a millimeter wave (mmW) system, since a wavelength is short, a plurality of antenna elements can be installed in the same area. That is, considering that the wavelength at 30 GHz band is 1 cm, a total of 100 antenna elements can be installed in a 5 * 5 cm panel at intervals of 0.5 lambda (wavelength) in the case of a 2-dimensional array. Therefore, in the mmW system, it is possible to improve the coverage or throughput by increasing the beamforming (BF) gain using multiple antenna elements.

In this case, each antenna element can include a transceiver unit (TXRU) to enable adjustment of transmit power and phase per antenna element. By doing so, each antenna element can perform independent beamforming per frequency resource.

However, installing TXRUs in all of the about 100 antenna elements is less feasible in terms of cost. Therefore, a method of mapping a plurality of antenna elements to one TXRU and adjusting the direction of a beam using an analog phase shifter has been considered. However, this method is disadvantageous in that frequency selective beamforming is impossible because only one beam direction is generated over the full band.

To solve this problem, as an intermediate form of digital BF and analog BF, hybrid BF with B TXRUs that are fewer than Q antenna elements can be considered. In the case of the hybrid BF, the number of beam directions that can be transmitted at the same time is limited to B or less, which depends on how B TXRUs and Q antenna elements are connected.

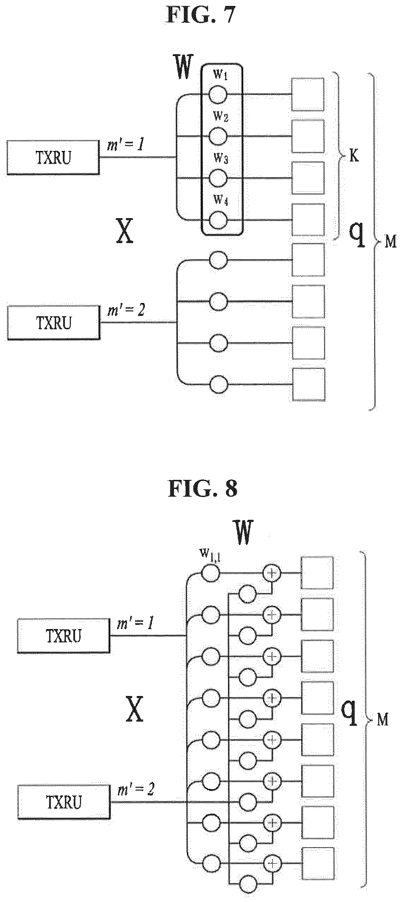

FIGs. 7 and 8 are diagrams illustrating representative methods for connecting TXRUs to antenna elements. Here, the TXRU virtualization model represents the relationship between TXRU output signals and antenna element output signals.

FIG. 7 shows a method for connecting TXRUs to sub-arrays. In FIG. 7, one antenna element is connected to one TXRU.

Meanwhile, FIG. 8 shows a method for connecting all TXRUs to all antenna elements. In FIG. 8, all antenna element are connected to all TXRUs. In this case, separate addition units are required to connect all antenna elements to all TXRUs as shown in FIG. 8.

In FIGs. 7 and 8, W indicates a phase vector weighted by an analog phase shifter. That is, W is a major parameter determining the direction of the analog beamforming. In this case, the mapping relationship between CSI-RS antenna ports and TXRUs may be 1:1 or 1-to-many.

The configuration shown in FIG. 7 has a disadvantage in that it is difficult to achieve beamforming focusing but has an advantage in that all antennas can be configured at low cost.

On the contrary, the configuration shown in FIG. 8 is advantageous in that beamforming focusing can be easily achieved. However, since all antenna elements are connected to the TXRU, it has a disadvantage of high cost.

When a plurality of antennas is used in the NR system to which the present invention is applicable, a hybrid beamforming (BF) scheme in which digital BF and analog BF are combined may be applied. In this case, analog BF (or radio frequency (RF) BF) means an operation of performing precoding (or combining) at an RF stage. In hybrid BF, each of a baseband stage and the RF stage perform precoding (or combining) and, therefore, performance approximating to digital BF can be achieved while reducing the number of RF chains and the number of a digital-to-analog (D/A) (or analog-to-digital (A/D) converters.

For convenience of description, a hybrid BF structure may be represented by N transceiver units (TXRUs) and M physical antennas. In this case, digital BF for L data layers to be transmitted by a transmission end may be represented by an N-by-L matrix. N converted digital signals obtained thereafter are converted into analog signals via the TXRUs and then subjected to analog BF, which is represented by an M-by-N matrix.

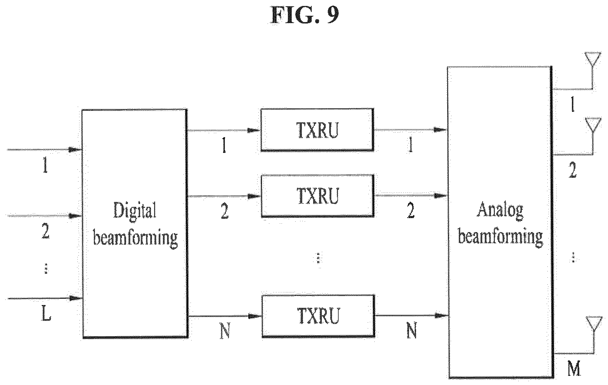

FIG. 9 is a diagram schematically illustrating an exemplary hybrid BF structure from the perspective of TXRUs and physical antennas according to the present invention. In FIG. 9, the number of digital beams is L and the number analog beams is N.

Additionally, in the NR system to which the present invention is applicable, an eNB designs analog BF to be changed in units of symbols to provide more efficient BF support to a UE located in a specific area. Furthermore, as illustrated in FIG. 9, when N specific TXRUs and M RF antennas are defined as one antenna panel, the NR system according to the present invention considers introducing a plurality of antenna panels to which independent hybrid BF is applicable.

In the case in which the eNB utilizes a plurality of analog beams as described above, the analog beams advantageous for signal reception may differ according to a UE. Therefore, in the NR system to which the present invention is applicable, a beam sweeping operation is being considered in which the eNB transmits signals (at least synchronization signals, system information, paging, and the like) by applying different analog beams in a specific subframe (SF) on a symbol-by-symbol basis so that all UEs may have reception opportunities.

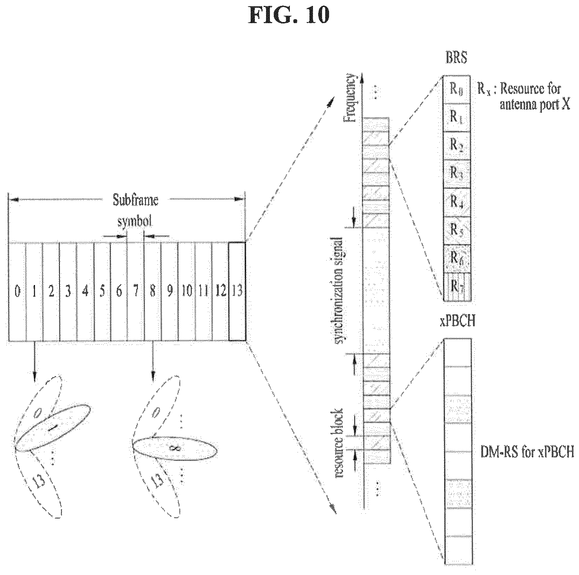

FIG. 10 is a diagram schematically illustrating an exemplary beam sweeping operation for a synchronization signal and system information in a DL transmission procedure according to the present invention.

In FIG. 10 below, a physical resource (or physical channel) on which the system information of the NR system to which the present invention is applicable is transmitted in a broadcasting manner is referred to as an xPBCH. Here, analog beams belonging to different antenna panels within one symbol may be simultaneously transmitted.

As illustrated in FIG. 10, in order to measure a channel for each analog beam in the NR system to which the present invention is applicable, introducing a beam RS (BRS), which is a reference signal (RS) transmitted by applying a single analog beam (corresponding to a specific antenna panel), is being discussed. The BRS may be defined for a plurality of antenna ports and each antenna port of the BRS may correspond to a single analog beam. In this case, unlike the BRS, a synchronization signal or the xPBCH may be transmitted by applying all analog beams in an analog beam group such that any UE may receive the signal well.

### 3. Narrow Band-Internet of Things (NB-IoT)

Hereinafter, the technical features of NB-IoT will be described in detail. While the NB-IoT system based on the 3GPP LTE standard will be mainly described for simplicity, the same configurations is also applicable to the 3GPP NR standard. To this end, some technical configurations may be modified (e.g., from subframe to slot)

Although the NB-IoT technology will be described in detail below based on the LTE standard technology, the LTE standard technology can be replaced with the NR standard technology within a range easily derived by those skilled in the art.

### 3.1. Operation Mode and Frequency

NB-IoT supports three operation modes of in-band, guard band, and stand-alone, and the same requirements apply to each mode.

(1) In the in-band mode, some of the resources in the Long-Term Evolution (LTE) band are allocated to NB-IoT.
(2) In the guard band mode, the guard frequency band of LTE is utilized, and the NB-IoT carrier is disposed as close to the edge subcarrier of the LTE as possible.

In the stand-alone mode, some carriers in the Global System for Mobile Communications (GSM) band are separately allocated and operated.

An NB-IoT UE searches for an anchor carrier in units of 100 kHz for initial synchronization, and the anchor carrier center frequency of the in-band and the guard band should be within $\pm$ 7.5 kHz from a channel raster of 100 kHz channel. In addition, among the LTE PRBs, 6 middle PRBs are not allocated to NB-IoT. Therefore, the anchor carrier may only be positioned on a specific Physical Resource Block (PRB).

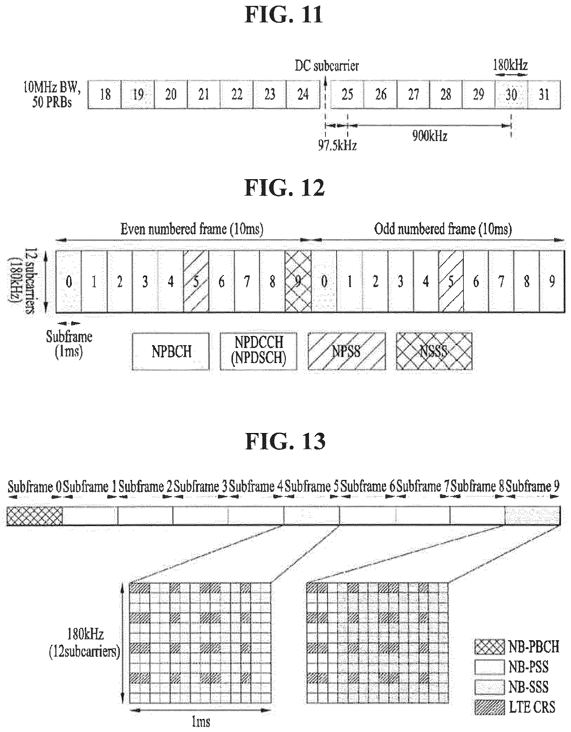

FIG. 11 is a diagram schematically illustrating arrangement of an in-band anchor carrier for an LTE bandwidth of 10 MHz.

As shown in FIG. 11, a direct current (DC) subcarrier is positioned at a channel raster. Since the center frequency interval between adjacent PRBs is 180 kHz, PRB indexes 4, 9, 14, 19, 30, 35, 40 and 45 have center frequencies at $\pm$ 2.5 kH from the channel raster.

Similarly, the center frequency of a PRB suitable for anchor carrier transmission is positioned at $\pm$ 2.5 kHz from the channel raster in the case of a bandwidth of 20 MHz, and is positioned at $\pm$ 7.5 kHz for bandwidths of 3 MHz, 5 MHz and 15 MHz.

In the guard band mode, the PRB immediately adjacent to the edge PRB of LTE is positioned at $\pm$ 2.5 kHz from the channel raster in the case of the bandwidths of 10 MHz and 20 MHz. In the case of 3 MHz, 5 MHz, and 15 MHz, the center frequency of the anchor carrier may be positioned at $\pm$ 7.5 kHz from the channel raster by using the guard frequency band corresponding to the three subcarriers from the edge PRB.

The stand-alone mode anchor carriers are aligned with a 100-kHz channel raster, and all GSM carriers, including DC carriers, may be used as NB-IoT anchor carriers.

In addition, the NB-IoT supports operation of multiple carriers, and combinations of in-band + in-band, in-band + guard band, guard band + guard band, and stand-alone + stand-alone may be used.

### 3.2. Physical Channel

#### 3.2.1. Downlink (DL)

For the NB-IoT downlink, an Orthogonal Frequency Division Multiple Access (OFDMA) scheme with a 15 kHz subcarrier spacing is employed. This scheme provides orthogonality between subcarriers to facilitate coexistence with LTE systems.

On the downlink, physical channels such as a narrowband physical broadcast channel (NPBCH), a narrowband physical downlink shared channel (NPDSCH), and a narrowband physical downlink control channel (NPDCCH) are provided, and a narrowband primary synchronization signal (NPSS), a narrowband primary synchronization signal (NSSS) and a narrowband reference signal (NRS) are provided as physical signals.

FIG. 12 is a diagram schematically illustrating positions where a physical downlink channel and a downlink signal are transmitted in an FDD LTE system.

As shown in FIG. 12, the NPBCH is transmitted in the first subframe of each frame, the NPSS is transmitted in the sixth subframe of each frame, and the NSSS is transmitted in the last subframe of each even-numbered frame.

The NB-IoT UE should acquire system information about a cell in order to access a network. To this end, synchronization with the cell should be obtained through a cell search procedure, and synchronization signals (NPSS, NSSS) are transmitted on the downlink for this purpose.

The NB-IoT UE acquires frequency, symbol, and frame synchronization using the synchronization signals and searches for 504 Physical Cell IDs (PCIDs). The LTE synchronization signal is designed to be transmitted over 6 PRB resources and is not reusable for NB-IoT, which uses 1 PRB.

Thus, a new NB-IoT synchronization signal has been designed and is to the three operation modes of NB-IoT in the same manner.

More specifically, the NPSS, which is a synchronization signal in the NB-IoT system, is composed of a Zadoff-Chu (ZC) sequence having a sequence length of 11 and a root index value of 5.

Here, the NPSS may be generated according to the following equation.

[Equation 1]

$$d_l(n) = S(l) \cdot e^{-j\frac{\pi u n(n+1)}{11}}, \quad n = 0, 1, \dots, 10$$

Here, S(1) for symbol index 1 may be defined as shown in the following table.

[Table 6]

| Cyclic prefix length | S(3),...,S(13) | | | | | | | | | | |
|---|---|---|---|---|---|---|---|---|---|---|---|
| Normal | 1 | 1 | 1 | 1 | -1 | -1 | 1 | 1 | 1 | -1 | 1 |

The NSSS, which is a synchronization signal in the NB-IoT system, is composed of a combination of a ZC sequence having a sequence length of 131 and a binary scrambling sequence such as a Hadamard sequence. In particular, the NSSS indicates a PCID to the NB-IoT UEs in the cell through the combination of the sequences.

Here, the NSSS may be generated according to the following equation.

[Equation 2]

$$d(n) = b_q(m) e^{-j2\pi\theta_f n} e^{-j\frac{\pi u n'(n'+1)}{131}}$$

Here, the parameters in Equation 2 may be defined as follows.

[Table 7]

$n = 0, 1, \dots, 131$
$n' = n \bmod 131$
$m = n \bmod 128$

$$u = N_{ID}^{Ncell} \bmod 126 + 3$$

$$q = \left\lfloor \frac{N_{ID}^{Ncell}}{126} \right\rfloor$$

The binary sequence $b_q(m)$ may be defined as shown in the following table, and the cyclic shift $\theta_f$ for the frame number $n_f$ may be defined by the equation given below.

[Table 8]

| $q$ | $b_q(0)....b_q(127)$ |
|---|---|
| 0 | [1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1] |
| 1 | [1 -1 -1 1 -1 1 1 -1 -1 1 1 -1 1 -1 -1 1 -1 1 1 -1 1 -1 -1 1 1 -1 -1 1 1 1 -1 1 -1 -1 1 -1 1 1 -1 1 -1 -1 1 -1 1 1 -1 1 -1 -1 1 -1 1 1 -1 -1 1 -1 -1 1 1 -1 -1 1 1 -1 -1 1 -1 1 1 -1 1 -1 -1 1 -1 1 1 -1 -1 1 1 -1 1 1 1 -1 -1 1 1 -1 1 -1 -1 1 -1 1 1 -1 1 -1 -1 1 -1 -1 1 -1 1 1 -1 -1 1 1 1 1 -1] |
| 2 | [1 -1 -1 1 -1 1 1 -1 -1 1 1 -1 1 -1 -1 1 -1 1 1 -1 1 -1 -1 1 1 -1 -1 1 1 1 -1 -1 1 1 -1 1 -1 -1 1 1 -1 1 -1 -1 1 1 -1 -1 1 -1 1 1 -1 -1 1 1 -1 -1 1 1 -1 -1 1 1 -1 -1 1 -1 1 1 -1 1 -1 -1 1 1 -1 -1 1 -1 1 1 -1 -1 1 1 -1 1 1 -1 -1 1 -1 1 1 -1 1 -1 -1 1 -1 1 1 -1 -1 1 1 -1 1 -1 -1 1 -1 1 1 -1 -1 1 1 -1 1 -1 1] |
| 3 | [1 -1 -1 1 -1 1 1 -1 -1 1 1 -1 1 -1 -1 1 -1 1 1 -1 1 -1 -1 1 1 -1 -1 1 1 1 -1 -1 1 -1 1 1 -1 -1 1 1 -1 1 -1 -1 1 -1 1 1 -1 1 -1 -1 1 1 -1 -1 1 -1 1 1 -1 1 1 1 -1 1 -1 1 1 -1 1 -1 -1 1 -1 1 1 -1 -1 1 1 -1 1 -1 -1 1 -1 1 1 -1 -1 1 1 1 1 -1 -1 1 1 -1 1 -1 -1 1 -1 1 1 -1 1 -1 -1 1 1 -1 -1 1 -1 -1 1 1 1 -1] |

[Equation 3]

$$\theta_f = \frac{33}{132}(n_f/2)\bmod 4$$

The NRS is provided as a reference signal for channel estimation necessary for physical downlink channel demodulation and is generated in the same manner as in LTE. However, NBNarrowband-Physical Cell ID (PCID) is used as the initial value for initialization.

The NRS is transmitted to one or two antenna ports, and up to two base station transmit antennas of NB-IoT are supported.

The NPBCH carries the Master Information Block-Narrowband (MIB-NB), which is the minimum system information that the NB-IoT UE should know to access the system, to the UE.

The transport block size (TBS) of the MIB-NB, which is 34 bits, is updated and transmitted with a periodicity of transmission time interval (TTIs) of 640 ms, and includes information such as the operation mode, the system frame number (SFN), the hyper-SFN, the cell-specific reference signal (CRS) port number, and the channel raster offset.

The NPBCH signal may be repeatedly transmitted 8 times in total to improve coverage.

The NPDCCH has the same transmit antenna configuration as the NPBCH, and supports three types of downlink control information (DCI) formats. DCI N0 is used to transmit the scheduling information of the narrowband physical uplink shared channel (NPUSCH) to the UE, and DCIs N1 and N2 are used in transmitting information required for demodulation of the NPDSCH to the UE. Transmission of the NPDCCH may be repeated up to 2048 times to improve coverage.

The NPDSCH is a physical channel for transmission of a transport channel (TrCH) such as the downlink-shared channel (DL-SCH) or the paging channel (PCH). The maximum TBS is 680 bits and transmission may be repeated up to 2048 times to improve coverage.

### 3.2.2. Uplink (UL)

The uplink physical channels include a narrowband physical random access channel (NPRACH) and the NPUSCH, and support single-tone transmission and multi-tone transmission.

Multi-tone transmission is only supported for subcarrier spacing of 15 kHz, and single-tone transmission is supported for subcarrier spacings of 3.5 kHz and 15 kHz.

On the uplink, the 15-Hz subcarrier spacing may maintain the orthogonality with the LTE, thereby providing the optimum performance. However, the 3.75-kHz subcarrier spacing may degrade the orthogonality, resulting in performance degradation due to interference.

The NPRACH preamble consists of four symbol groups, wherein each of the symbol groups consists of a cyclic prefix (CP) and five symbols. The NPRACH only supports single-tone transmission with 3.75-kHz subcarrier spacing and provides CPs having lengths of 66.7$\mu$s and 266.67$\mu$s to support different cell radii. Each symbol group performs frequency hopping and the hopping pattern is as follows.

The subcarrier for transmitting the first symbol group is determined in a pseudo-random manner. The second symbol group hops by one subcarrier, the third symbol group hops by six subcarriers, and the fourth symbol group hops by one subcarrier hop.

In the case of repeated transmission, the frequency hopping procedure is repeatedly applied. In order to improve the coverage, the NPRACH preamble may be repeatedly transmitted up to 128 times.

The NPUSCH supports two formats. Format 1 is for UL-SCH transmission, and the maximum transmission block size (TBS) thereof is 1000 bits. Format 2 is used for transmission of uplink control information such as HARQ ACK signaling. Format 1 supports single-tone transmission and multi-tone transmission, and Format 2 supports only single-tone transmission. In single-tone transmission, p/2-binary phase shift keying (BPSK) and p/4- QPSK (quadrature phase shift keying) are used to reduce the peat-to-average power ratio (PAPR).

3.2.3. Resource Mapping

In the stand-alone and guard band modes, all resources included in 1 PRB may be allocated to the NB-IoT. However, in the in-band mode, resource mapping is limited in order to maintain orthogonality with the existing LTE signals.

The NB-IoT UE should detect NPSS and NSSS for initial synchronization in the absence of system information. Accordingly, resources (OFDM symbols 0 to 2 in each subframe) classified as the LTE control channel allocation region cannot be allocated to the NPSS and NSSS, and NPSS and NSSS symbols mapped to a resource element (RE) overlapping with the LTE CRS should be punctured.

FIG. 13 is a diagram illustrating exemplary resource allocation of an NB-IoT signal and an LTE signal in an in-band mode.

As shown in FIG. 13, for ease of implementation, the NPSS and NSSS are not transmitted on the first three OFDM symbols in the subframe corresponding to the transmission resource region for the control channel in the conventional LTE system regardless of the operation mode. REs for the common reference signal (CRS) in the conventional LTE system and the NPSS/NSSS colliding on a physical resource are punctured and mapped so as not to affect the conventional LTE system.

After the cell search, the NB-IoT UE demodulates the NPBCH in the absence of system information other than the PCID. Therefore, the NPBCH symbol cannot be mapped to the LTE control channel allocation region. Since four LTE antenna ports and two NB-IoT antenna ports should be assumed, the REs allocated to the CRS and NRS cannot be allocated to the NPBCH. Therefore, the NPBCH should be rate-matched according to the given available resources.

After demodulating the NPBCH, the NB-IoT UE may acquire information about the CRS antenna port number, but still may not know the information about the LTE control channel allocation region. Therefore, NPDSCH for transmitting System Information Block type 1 (SIB1) data is not mapped to resources classified as the LTE control channel allocation region.

However, unlike the case of the NPBCH, an RE not allocated to the LTE CRS may be allocated to the NPDSCH. Since the NB-IoT UE has acquired all the information related to resource mapping after receiving SIB1, the NPDSCH (except for the case where SIB1 is transmitted) and the NPDCCH may be mapped to available resources based on the LTE control channel information and the CRS antenna port number.

## 4. Proposed embodiments

Hereinafter, the present invention will be described in more detail based on the technical ideas disclosed above.

Low cost modems, such as eMTC (enhanced Machine-Type-Communication)/feMTC (further enhanced machine-type-communication) and NB-IoT, transmit and receive signals in a limited band, while supporting the maximum coupling loss (MCL). To this end, various receptions are supported on downlink and uplink, and several tens, several hundreds or more of receptions are allowed according to physical layer channels which are used for transmission and reception, coverage, or signal quality.

In the case of the TDD system, which has a limited number of subframes for downlink and uplink, throughput is greatly reduced due to insufficient available resources. In particular, in the case of NB-IoT in which uplink (or downlink) transmission (or reception) is not allowed during repetition of one downlink (or uplink) codeword, throughput is greatly reduced, or repetition cannot be effectively applied to a structure having subframes that are consecutive only within a certain interval in the time domain.

There may be needs for support for in-band and guard-band modes as well as the standalone mode for operators using the TDD band. Accordingly, in order to design an efficient TDD standard for a low cost Low Power Wide Area Network (LPWAN) supporting many repetitions, the present invention proposes a method of extending a gap period of a special subframe to downlink or uplink.

The features proposed in the present invention are mainly applicable to features such as eMTC and NB-IoT, and may be applied even to newly designed features or wideband modems. Hereinafter, the present invention will be described in detail, taking the NB-IoT system as an example for convenience of explanation. It should be noted, however, that the present invention is limited to the NB-IoT system but is applicable to various other systems, as described above.

UL/DL configurations of TDD frame structure type 2 are shown in the following table.

[Table 9]

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Here, D, U, and S denote downlink, uplink, and special subframe, respectively. For an eNB for which the Enhanced Interference Mitigation & Traffic Adaptation (eIMTA) feature is supported, a part of the UL subframes may be dynamically changed to DL subframes.

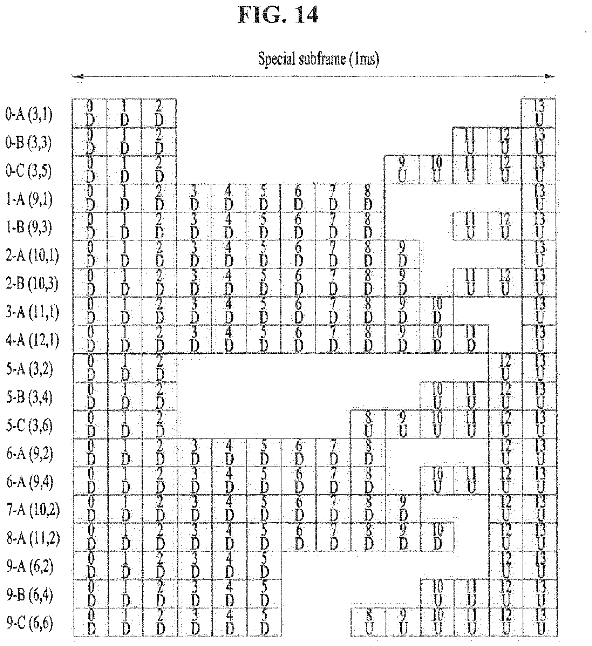

The DwPTS and the UpPTS are configured before and after a special subframe that is present between DL and UL intervals, respectively. The gap between the DwPTS and the UpPTS is used for downlink-to-uplink switching and timing advanced (TA). As described above, the configuration of the OFDM or SC-FDMA symbol level in the special subframe may be represented as shown in FIGs. 14 to 17 according to the CP length of the downlink and uplink and the higher layer parameter srs-UpPtsAdd. Here, as described above, X (srs-UpPtsAdd) may not be set to 2 for special subframe configurations {3, 4, 7, 8} for normal CP in downlink and special subframe configurations {2, 3, 5, 6} for extended CP in downlink. In addition, X (srs-UpPtsAdd) may not be set to 4 for special subframe configurations {1, 2, 3, 4, 6, 7, 8} for normal CP in downlink and special subframe configurations {1, 2, 3, 5, 6} for extended CP in downlink.

FIG. 14 is a diagram illustrating special subframe configurations to which normal CP in DL and normal CP in UL are applied.

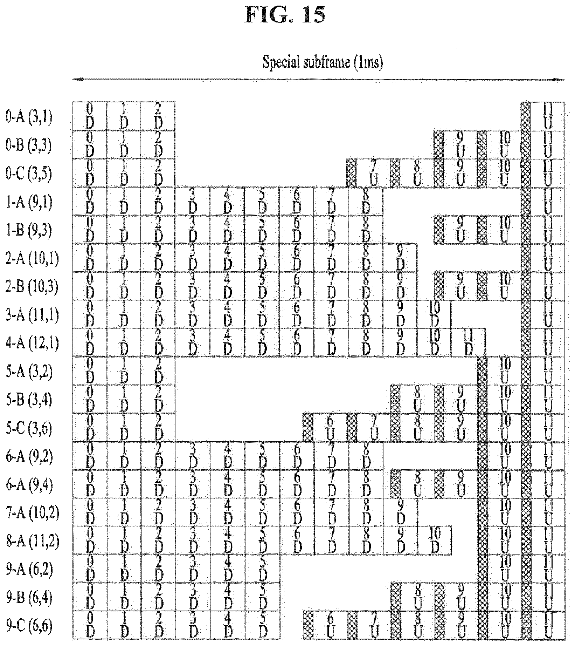

FIG. 15 is a diagram illustrating special subframe configurations to which normal CP in DL and extended CP in UL are applied.

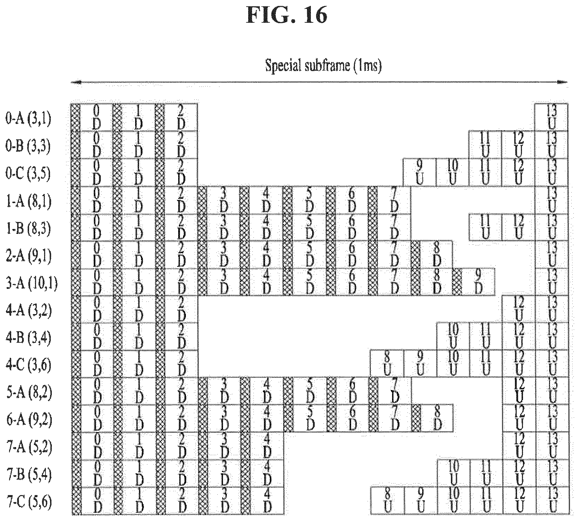

FIG. 16 is a diagram illustrating special subframe configurations to which extended CP in DL and normal CP in UL are applied.

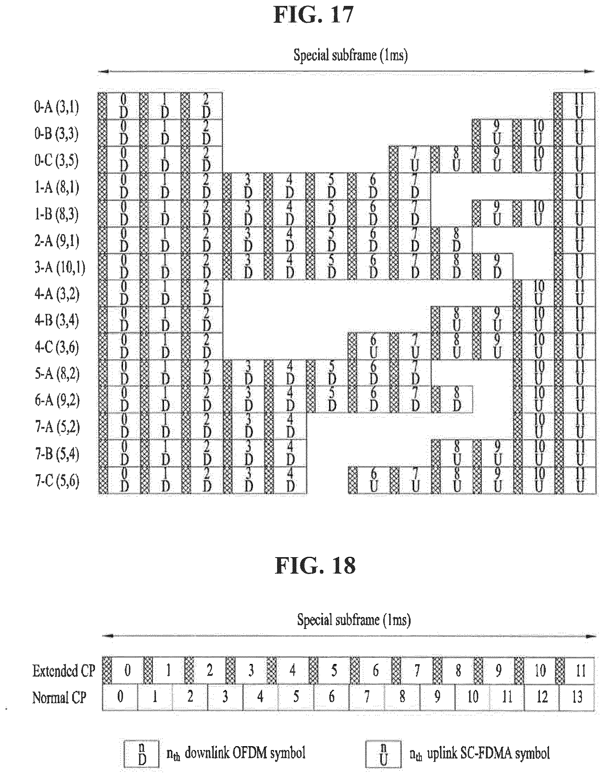

FIG. 17 is a diagram illustrating special subframe configurations to which extended CP in DL and extended CP in UL are applied.

FIG. 18 is a diagram illustrating subframe configuration and the meaning of notations according to the CP length in FIGs. 14 to 17. As shown in FIG. 18, a subframe according to extended CP is composed of 12 symbols, and a subframe according to normal CP is composed of 14 symbols. Here, each DL symbol and UL symbol may be represented as shown at the bottom in FIG. 18.

Here, it is assumed that the n-th downlink/uplink symbol of DwPTS/UpPTS and the index n of an additional downlink/uplink symbol conform to the index numbers of FIG. 18 for convenience of explanation and expression. That is, in each configuration, the starting index of n_U may not be 0.

In FIGs. 14 to 17, the null period of the DwPTS and UpPTS periods may be used as a DL-to-UL switching gap by the UE (e.g., the NB-IoT UE), and may be configured as about 20 usec, which is about 1/3 times shorter than the periodicity of the OFDM or SC-FDMA symbol. Also, n-A (x, y) in each row represents the default type of the n-th special subframe configuration having DwPTS and UpPTS periods including x and y OFDM and SC-FDMA symbols, and n-B (x,y+2) and n-C (x,y+4) represent special subframe configurations in which the number of SC-FDMA symbols is increased from the default type n-A (x, y) according to the value of X (srs-UpPtsAdd).

As described above, in the TDD system, the number of subframes fixed to downlink may vary according to the UL/DL configurations, and even the number of OFDM symbols fixed to downlink in the special subframe may vary according to the special subframe configurations. The null period may be variously configured in consideration of the uplink timing advance and the maximum downlink channel propagation delay according to cell coverage.

However, considering that the TDD system supports narrower coverage than the FDD system, there may be cases where an excessive number of null periods are allocated.

If the maximum downlink channel propagation delay and the uplink timing advance are not as large as the null period or the downlink and uplink of the UE can be scheduled non-continuously (e.g., NB-IoT or eMTC), a part of the null period may be extended to downlink or uplink.

In other words, if a specific UE receives a downlink signal by extending the DwPTS period and does not transmit an uplink signal in the UpPTS period of the same special subframe, or vice versa (the UE does not receive a downlink signal in the DwPTS period, but transmits an uplink signal by extending the UpPTS period), the maximum downlink channel propagation delay and uplink timing advance may not need to be considered together.

Moreover, as can be seen from FIG. 15, according to normal CP, the number of OFDM symbols that may be used in the DwPTS period is 3, 6, 9, 10, or 11, and the number of SC-FDMA symbols that may be used in the UpPTS period is 1, 2, 3, 4, 5, or 6. Accordingly, applicable combinations of the number of OFDM symbols and the number of SC-FDMA symbols are limited to some of the combinations thereof.

Accordingly, the combinations may not be suitable for flexible use on a per-symbol basis.

In particular, considering that the channel propagation delay and uplink timing advance described above may have consecutive values, a method capable of supporting controllability on the per-symbol basis may be required.

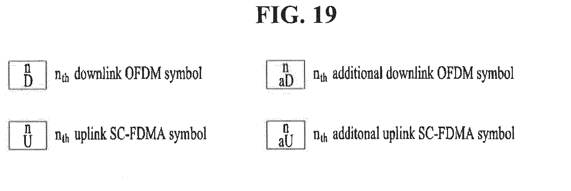

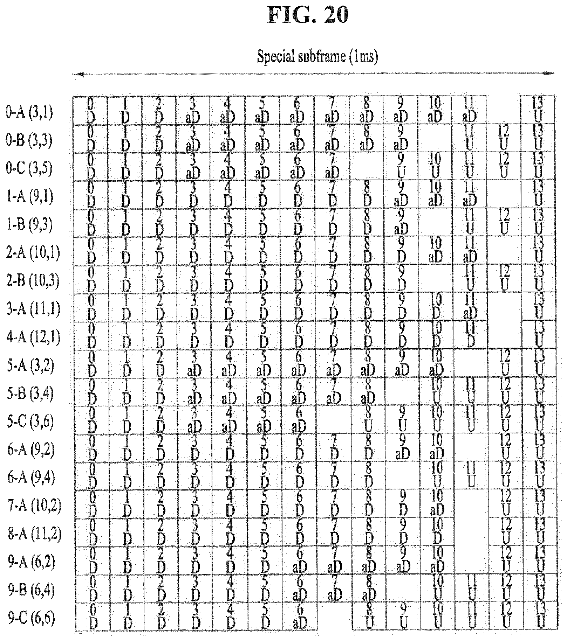

In this regard, a method of extending special subframe configurations according to the present invention will be described in detail. FIG. 19 is a diagram showing a common legend applied to FIGs. 20 to 31 for description of the present invention.

In the present invention, it is assumed that the n-th downlink/uplink symbol of the DwPTS/UpPTS and the additional downlink/uplink symbol index n conform to the index numbers of FIG. 14 for convenience of explanation and expression. Accordingly, in each configuration, the start index may not be 0 for n_aD, n_aU, and n_U.

Hereinafter, special subframe configurations proposed in the present invention based on the common legend of FIG. 19 are shown in FIGs. 20 to 31.

FIG. 20 is a diagram illustrating a first special subframe configuration proposed in the present invention. Specifically, FIG. 20 is a diagram illustrating a special subframe configurations type-D in which "normal CP in DL and normal CP in UL" is applied.

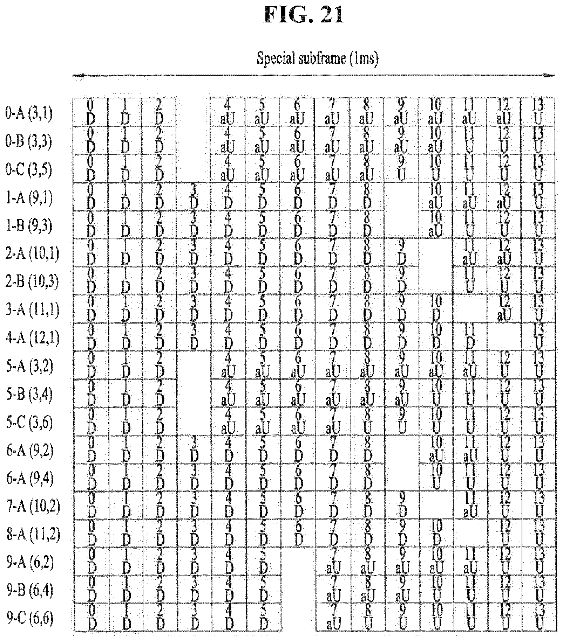

FIG. 21 is a diagram illustrating a second special subframe configuration proposed in the present invention. Specifically, FIG. 21 is a diagram illustrating a special subframe configurations type-U in which "normal CP in DL and normal CP in UL" is applied.

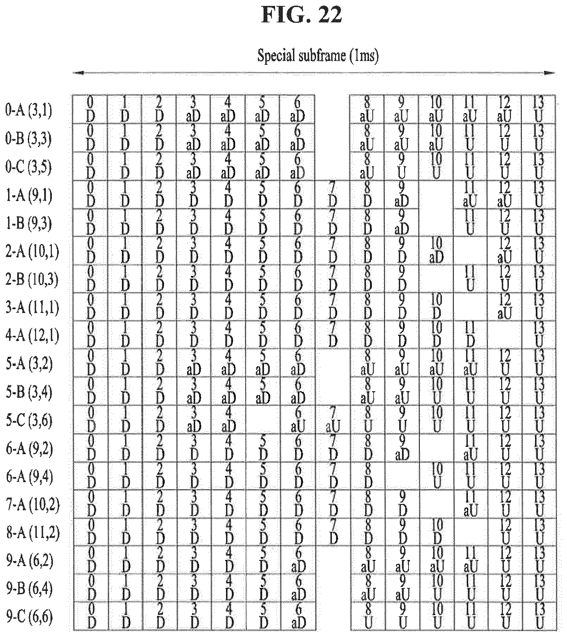

FIG. 22 is a diagram illustrating a third special subframe configuration proposed in the present invention. Specifically, FIG. 22 is a diagram illustrating a special subframe configurations type-C in which "normal CP in DL and normal CP in UL" is applied.

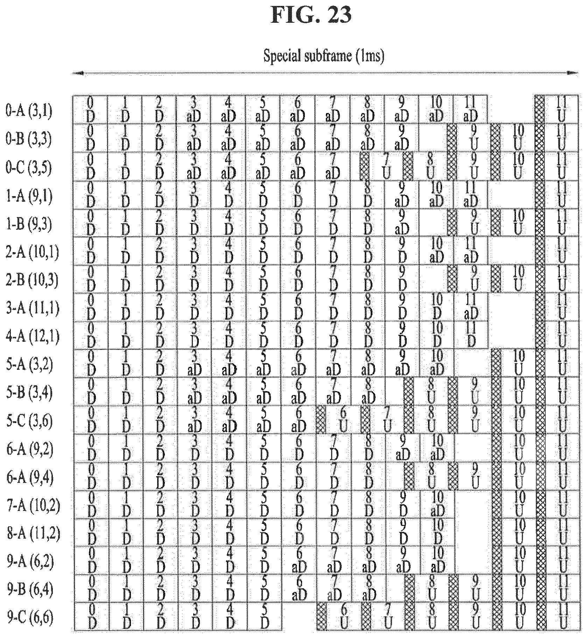

FIG. 23 is a diagram illustrating a fourth special subframe configuration proposed in the present invention. Specifically, FIG. 23 is a diagram illustrating a special subframe configurations type-D in which "normal CP in DL and extended CP in UL" is applied.

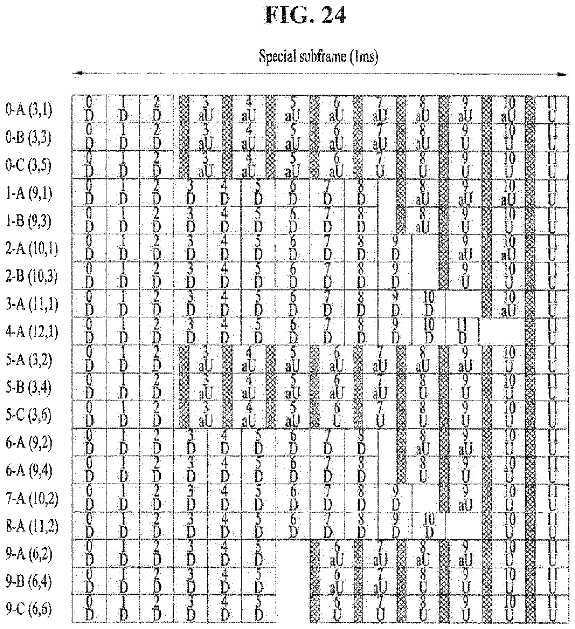

FIG. 24 is a diagram illustrating a fifth special subframe configuration proposed in the present invention. Specifically, FIG. 24 is a diagram illustrating a special subframe configurations type-U in which "normal CP in DL and extended CP in UL" is applied.

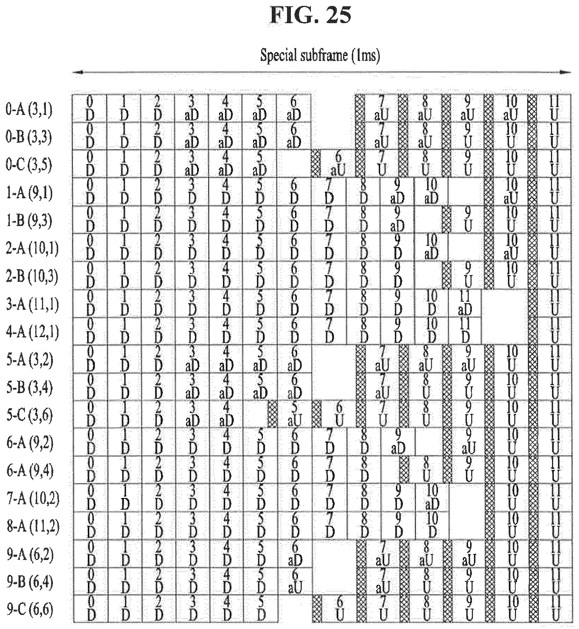

FIG. 25 is a diagram illustrating a sixth special subframe configuration proposed in the present invention. Specifically, FIG. 25 is a diagram illustrating a special subframe configurations type-C in which "normal CP in DL and extended CP in UL" is applied.

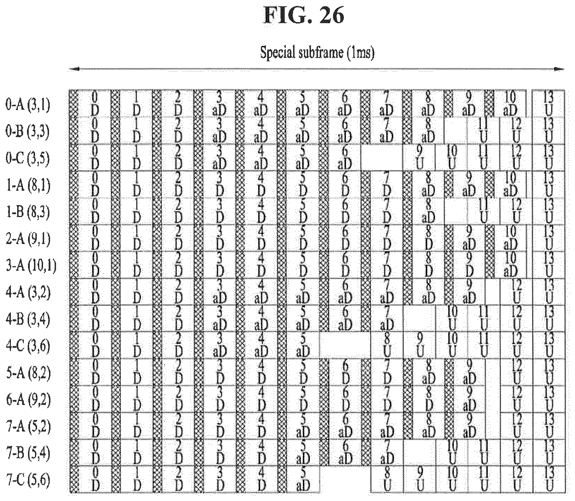

FIG. 26 is a diagram illustrating a seventh special subframe configuration proposed in the present invention. Specifically, FIG. 26 is a diagram illustrating a special subframe configurations type-D in which "extended CP in DL and normal CP in UL" is applied.

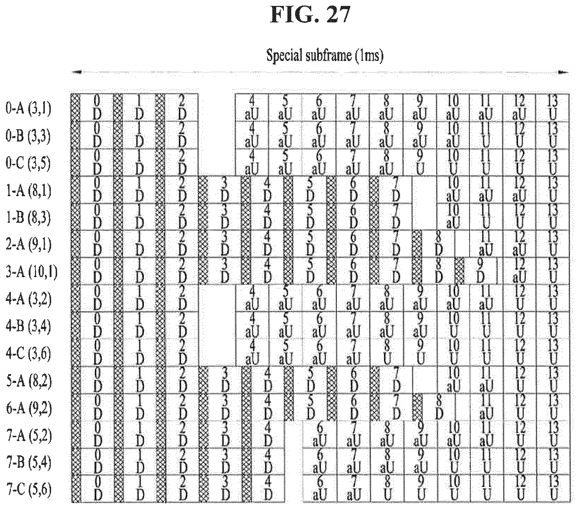

FIG. 27 is a diagram illustrating an eighth special subframe configuration proposed in the present invention. Specifically, FIG. 27 is a diagram illustrating a special subframe configurations type-U in which "extended CP in DL and normal CP in UL" is applied.

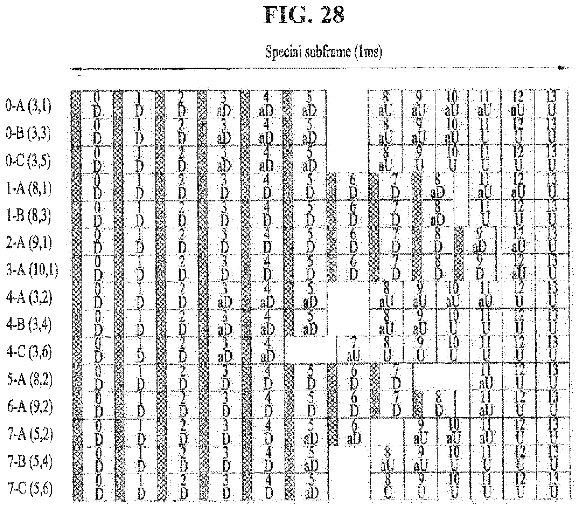

FIG. 28 is a diagram illustrating a ninth special subframe configuration proposed in the present invention. Specifically, FIG. 28 is a diagram illustrating a special subframe configurations type-D in which "extended CP in DL and normal CP in UL" is applied.

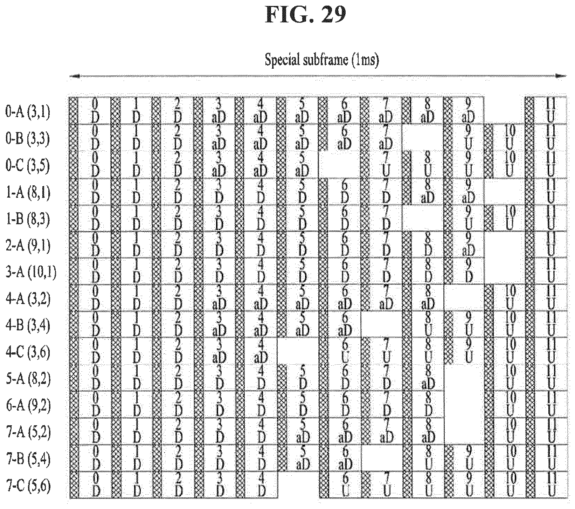

FIG. 29 is a diagram illustrating a tenth special subframe configuration proposed in the present invention. Specifically, FIG. 29 is a diagram illustrating a special subframe configurations type-D in which "extended CP in DL and extended CP in UL" is applied.

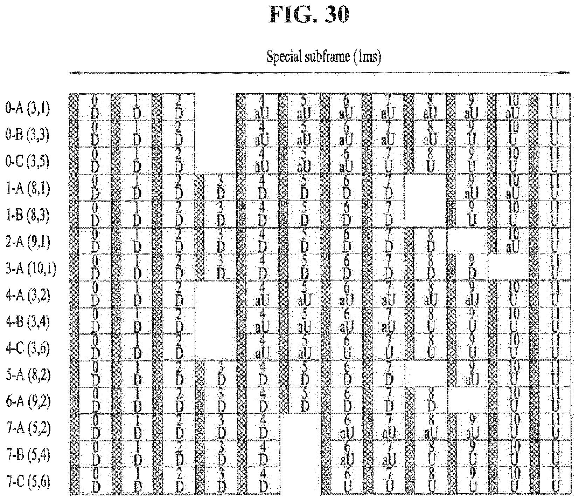

FIG. 30 is a diagram illustrating a eleventh special subframe configuration proposed in the present invention. Specifically, FIG. 30 is a diagram illustrating a special subframe configurations type-U in which "extended CP in DL and extended CP in UL" is applied.

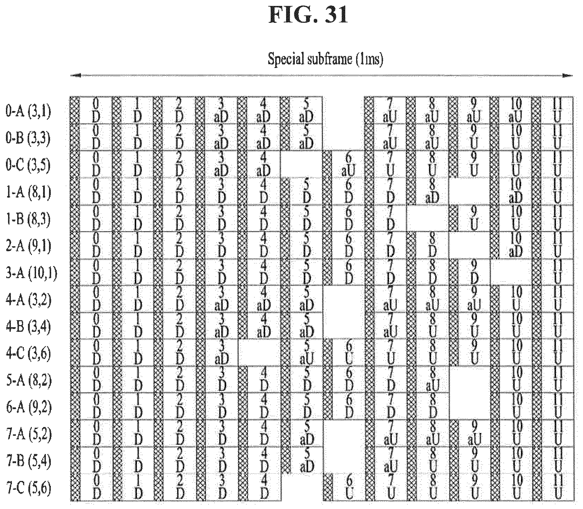

FIG. 31 is a diagram illustrating a twelfth special subframe configuration proposed in the present invention. Specifically, FIG. 31 is a diagram illustrating a special subframe configurations type-U in which "extended CP in DL and extended CP in UL" is applied.

In FIGs. 20 to 31, type-D and type-U mean adding an additional downlink symbol aD and an additional uplink symbol aU to the gap period between the DwPTS and the UpPTS, respectively, to extend DwPTS and UpPTS, and type-C means adding an additional downlink symbol and an additional uplink symbol to the DwPTS and the UpPTS to extend both the DwPTS and the UpPTS.

Here, in order to ensure a minimum DL-to-UL switching time, an additional downlink or uplink symbol may not be allocated to some special subframe configurations.

In addition, the extended periods of DwPTS and UpPTS of all types may be predefined in a band-specific or band-agnostic manner, may be (semi-)statically configured through a high-level signal/message in a cell-specific or UE-specific manner, or may be dynamically configured through DCI or the like in a cell-specific or UE-specific manner.

Specifically, when DwPTS and UpPTS are used in an extended form by allocating additional downlink and uplink symbols thereto, some configuration options may have similar structures to other configuration options.

For example, when the DwPTS, which is in normal CP, is extended by the type-D method, 0-A (3,1), 1-A (9,1), 2-A (10, 1), 3-A (11,1), and 4-A (12,1) of FIG. 20 have the same number of downlink OFDM symbols, which is 12, and the same number of uplink SC-FDMA symbols, which is 1. However, they may be different from each other in terms of the number of OFDM symbols added for extension. Such structures may be recognized as being different from each other or the same from the UE perspective in terms of the number of OFDM symbols on which the CRS is transmitted and the number of symbols on which the NRS can be additionally transmitted.

On OFDM or SC-FDMA symbols of the DwPTS and UpPTS periods defined in the legacy LTE standard, reference signals (e.g., a cell common reference signal (CRS), a channel state information-reference signal (CSI-RS), a UE-specific RS, a phase tracking reference signal (PTRS), a demodulation reference signal (DMRS), a sounding reference signal (SRS), etc.) defined in the standard may be transmitted. However, such reference signals may not be transmitted on symbols included in the extended DwPTS and UpPTS periods.

For example, when the extended DwPTS and UpPTS periods are used for the NB-IoT UE, the legacy LTE reference signals may be allocated only to the symbols of the DwPTS and UpPTS, and only NRS or DMRS may be allocated to the symbols of the extended DwPTS and UpPTS to obtain the gain of code rate. In other words, the rate matching in the extended DwPTS and UpPTS periods may be designed differently from the rate matching in the existing DwPTS and UpPTS periods.

Alternatively, in the extended DwPTS period, (1) only transmission of the NPDSCH may be allowed without a reference signal, or (2) only transmission of a signal or sequence for use in measurement, cross-subframe channel estimation or synchronization tracking may be allowed, and NPDSCH transmission may not be allowed.

In this case, the DwPTS period may be indicated or interpreted differently from the existing downlink valid subframe.

As an example of case (1), the NPDSCH transmitted in the extended DwPTS period may be different from resource mapping and rate matching of a normal DL subframe. In addition, the DwPTS period may not be indicated as a downlink valid subframe in terms of transmission of the NRS, but may be indicated as a subframe in which the NPDSCH can be transmitted. That is, the DwPTS period may be indicated as a third subframe rather than an existing downlink valid subframe (e.g., a subframe in which the NRS is transmitted and the NPDSCH can be transmitted in interpretation of a DL grant).

Alternatively, the NPDSCH resource mapping and code rate or TBS may be interpreted differently except for the DwPTS period.

As an example of case (2), the extended DwPTS period may allow transmission of a reference signal or sequence therein, but may be treated as a subframe in which the NPDSCH cannot be scheduled in interpreting the DL grant. Here, the reference signal or sequence may have the same or similar structure to the existing NRS, and may be combined with the NRS or managed separately.

Similarly, in the extended UpPTS period, (3) only transmission of the NPUSCH may be allowed without the DMRS, or (4) only transmission of a signal or sequence for use in channel estimation and quality measurement may be allowed, and NPUSCH transmission may not be allowed. In this case, the UpPTS period may be applied in other ways in interpreting the existing UL grant.

As an example of case (3), an operation different from resource mapping and rate matching of the normal UL subframe may be applied to the NPUSCH transmitted in the extended UpPTS period. In addition, the DMRS may not be transmitted in the extended UpPTS period. Further, if the UpPTS period is included in the NPUSCH interval scheduled through the UL grant, the resource mapping, the code rate or the TBS in the remaining intervals as well as the extended UpPTS period may be interpreted differently.

As an example of case (4), if the UL grant allocates the NPUSCH only to the UpPTS or the extended UpPTS, the eNB does not actually transmit data but may configure the UpPTS and extended UpPTS periods with the DMRS or a special reference signal.

As another method, when an UpPTS period is indicated in the UL grant as a start subframe of the NPUSCH, the (NB-IoT) UE may transmit only the DMRS designed in a specific pattern without actually transmitting the NPUSCH. This case may be interpreted differently from a case where a special subframe is included in the repetition while the NPUSCH start subframe is not indicated as a special subframe. In an embodiment of the operation, the eNB may utilize the mechanism described above to request a UL RS before DL precoding.

Whether to use the above-described configurations and the eDwPTS and eUpPTS, which will be described below, may be determined or usage thereof may be defined differently, depending on the coverage enhancement (CE) mode or CE level of the UE.

In the present invention, a configuration for additionally using DL OFDM symbols and UL SC-FDMA symbols of a longer period than the DwPTS and UpPTS used in the legacy LTE system is proposed. With this configuration, <1> performance improvement may be expected by preventing the legacy CRS from being transmitted in the eDwPTS period, or <2> the legacy DwPTS/UpPTS period without controllability on the symbol number basis may be more efficiently used. Moreover, as can be seen from the concept of DL-Symb-Bitmap and UL-Symb-Bitmap proposed in the third proposal described below, the eDwPTS and the eUpPTS may be used not only to extend the legacy DwPTS and UpPTS, but also restrict the NB-IoT system such that the system uses only some symbols of the legacy DwPTS and UpPTS.

### 4.1. First proposal: "Extended special subframe configurations"

In this section, a method of allocating a DL-to-UL switching gap and a gap period for channel propagation delay and timing advance so as to be used for downlink, uplink, or sidelink for a specific UE will be described. As an example, the proposed method may be employed when the maximum downlink channel propagation delay and the uplink timing advance are not as large as the null period, or when the downlink and uplink of the UE can be non-continuously scheduled.

As an example, only the DwPTS may be extended (in the case of legacy LTE, for example). In this case, a specific special subframe configuration may be configured such that extension of the DwPTS is limited or only the DwPTS is allowed to be extended.

As another example, only the UpPTS may be extended (in the case of legacy LTE, for example). In this case, a specific special subframe configuration may be configured such that extension of the UpPTS is limited or only the UpPTS is allowed to be extended.

As another example, both DwPTS and UpPTS may be extended (in the case of legacy LTE, for example).

For a specific special subframe configuration, extension of the DwPTS and UpPTS may be limited.

### 4.2. Second proposal: "Symbol structures in an extended special subframe"

Symbols (e.g. OFDM or SC-FDMA or single-carrier, etc.) of an extended special subframe may be implemented differently in many aspects from the existing DwPTS and UpPTS. In this case, when the extended DwPTS and the UpPTS periods are referred to as eDwPTS and eUpPTS, they may be distinguished as follows.

#### (1) Number of symbols

The number of symbols included in the eDwPTS or eUpPTS may be configured differently within the gap period for DL-to-UL switching. In addition, the eDwPTS and eUpPTS period may be configured so as not to overlap with each other.

#### (2) Numerology

The sub-carrier spacing and the CP length configured in the DwPTS or UpPTS period may be different from those in the eDwPTS or eUpPTS. Further, the number of symbols included in the eDwPTS or eUpPTS period may be changed according to the numerology applied to the eDwPTS or eUpPTS period.

#### (3) Reference signals

**[0217]** - In the eDwPTS or eUpPTS period, reference signals included in the DwPTS or UpPTS may not be transmitted. In addition, reference signals included in the eDwPTS or eUpPTS period may not be included in the DwPTS or UpPTS.

**[0218]** - - As an example, in the case of NB-IoT, in the eDwPTS period, CRS may not be transmitted and NRS may be transmitted or omitted depending on the number of symbols of the eDwPTS.

In this case, when the NRS is transmitted, the position of a symbol or resource element (RE) of the NRS may be configured to be the same as or different from the position of a downlink subframe (or slot) rather than a special subframe.

The NPDSCH transmitted in the eDwPTS and/or the DwPTS may not contain the NRS, or may contain the NRS only at the same position as the NRS position of the normal subframe (or slot). In this case, subframes indicated in DL-Bitmap-NB-r13 (DL valid subframe) configured through SIB1-NB or RRC may not include a special subframe. However, the special subframe may be applied to the NPDSCH resource (subframe) count of a specific UE for which the NPDSCH is scheduled through a DL grant.

**[0221]** - In the eDwPTS and/or DwPTS, only reference signals that are mapped to resources in a different manner from NRS or NRS of a normal subframe (or slot) may be transmitted. At this time, NPDSCH may not be transmitted. As a specific example, a special subframe may be included in the DL valid subframes. However, the special subframe may not be considered in performing the NPDSCH resource (subframe) count (mapping) as the NPDSCH is scheduled through the DL grant.

**[0222]** - - As another example, in the case of NB-IoT, the DMRS may not be transmitted in the eUpPTS period, or transmission of the DMRS may be omitted depending on the number of symbols of the eUpPTS.

**[0223]** - In particular, when the DMRS is transmitted, the position of the symbol or resource element (RE) of the DMRS may be configured to be the same as or different from the position of the uplink subframe (or slot) rather than the special subframe.

**[0224]** - The NPUSCH transmitted in the eUpPTS and/or UpPTS may not include the DMRS, or may include the DMRS only at the same position as the DMRS position of a normal subframe (or slot). Here, whether to perform the operation of scheduling the NPUSCH including the special subframe through the UL grant may depend on the UE capability.

**[0225]** - In the eUpPTS and/or UpPTS, only reference signals that are mapped to resources in a different manner from DMRS or DMRS of the normal subframe (or slot) may be transmitted. At this time, the NPUSCH may not be transmitted. In this case, if the position of the NPUSCH starting subframe indicated by the UL grant is a special subframe and other fields of the corresponding DCI have a special combination, only the reference signal may be transmitted in the special subframe with the NPUSCH transmission omitted. In this case, the delay until NPDCCH monitoring after transmission of the reference signal is completed may be shorter than or equal to that given in the case where the NPUSCH is transmitted.

**[0226]** - The reference signals included in the eDwPTS or eUpPTS period may have a quasi-colocation (QCL) relationship with the reference signals included in the DwPTS or UpPTS, and the UE or the eNB may use all the reference signals included in the eDwPTS or eUpPTS and the reference signals included in the DwPTS or UpPTS in performing channel estimation or the like.

In this case, for example, if large-scale properties of a radio channel on which one symbol transmission is performed through one antenna port can be inferred from a radio channel on which one symbol transmission is performed through another antenna port, the two antenna ports are expressed as having a QCL relationship. Here, the large-scale properties include at least one of a delay spread, a Doppler spread, a Doppler shift, an average gain, and an average delay. That is, QCL of the two antenna ports means that the large-scale properties of a radio channel from one antenna port are the same as the large-scale properties of a radio channel from the other antenna port. Considering a plurality of antenna ports through which reference signals (RSs) are transmitted, if the antenna ports through which two different types of RSs are transmitted has a QCL relationship, the large-scale properties of a radio channel from one type of antenna port may be replaced by the large-scale properties of a radio channel from the other type of antenna port.

**[0228]** - The positions and structures of the reference signals included in the eDwPTS or eUpPTS period may depend on the number of symbols of the eDwPTS or eUpPTS.

**[0229]** - The positions, structures, and sequences of the reference signals included in the eDwPTS or eUpPTS period may be configured differently according to the type of a channel transmitted in the eUpPTS (whether PUCCH format, PUSCH or SRS is included) or the slot format, and execution of repetition/the number of repetitions.

(4) Rate-matching and modulation

The eDwPTS/eUpPTS and the DwPTS/UpPTS, which have different numerologies or reference signal structures, may be designed differently in rate matching.

**[0231]** - As an example, a transport block or codeword may be transmitted over the DwPTS and eDwPTS (or the UpPTS and eUpPTS).

**[0232]** - - In this case, different modulation orders may be applied to the DwPTS and the eDwPTS (or the UpPTS and the eUpPTS).

**[0233]** - - In addition, the number of available REs and the number of rate-matching output bits may be counted differently according to the DwPTS and the eDwPTS (or the UpPTS and the eUpPTS).

**[0234]** - The modulation order, numerology and reference signals excluded from calculation of available REs may differ between the DwPTS and the eDwPTS (or the UpPTS and the eUpPTS). Accordingly, the rate matching of the eDwPTS (or eUpPTS) may be configured differently from the rate conventional matching of symbols configured only as the DwPTS (or UpPTS).

**[0235]** - As another example, a transport block or codeword may be transmitted independently for the DwPTS and the eDwPTS (or the UpPTS and the eUpPTS).

**[0236]** - - In this case, the rate matching of the eDwPTS (or eUpPTS) may be configured differently from the conventional rate matching of symbol configured only as the DwPTS (or UpPTS).

(5) Channels that can be transmitted and received

**[0237]** - In the eDwPTS and eUpPTS periods, channels different from the channels that can be transmitted and received in the DwPTS and UpPTS periods may be transmitted and received.

**[0238]** - - The eDwPTS may be included in the PDCCH, ePDCCH, MPDCCH, or NPDCCH monitoring interval together with or separately from the DwPTS.

**[0239]** - - In the eDwPTS, the PDSCH and the NPDSCH may be transmitted together with or separately from the DwPTS. For example, if only the DwPTS is used, the PDSCH or NPDSCH may not be transmitted depending on the special subframe configuration. However, a UE performing reception even in the eDwPTS may expect to receive PDSCH through eDwPTS.

**[0240]** - - In the eUpPTS along with or separately from the UpPTS, the PUCCH, PUSCH, SRS, PRACH, NPUSCH, or NPRACH may be transmitted. For example, if only the UpPTS is used, the PUCCH, PUSCH, SRS, or PRACH may not be transmitted depending on the special subframe configuration. However, a UE capable of using even the eUpPTS may expect allocation of PUCCH, PUSCH, SRS, or PRACH through the eUpPTS.

**[0241]** - - When normal CP and extended CP are used, The (f)eMTC system may support special subframe configurations 3, 4, and 8 for the normal CP and special subframe configurations 1, 2, 3, 5 and 6 for the extended CP. Here, if the eDwPTS and eUpPTS are applied, the (f)eMTC system may support more special subframe configurations.

**[0242]** - For a channel including repetition (e.g., NPDCCH, NPDSCH, NPUSCH, NPRACH, MPDCCH, PDSCH), there may be a restriction on the starting position of repetition in the eDwPTS and eUpPTS periods.

**[0243]** - - When a gap is allocated between repetitions, the starting position of the repetition for the eDwPTS and eUpPTS may be different from that of the normal DL or UL subframe, the DwPTS and the UpPTS.

**[0244]** - - As an example, repetition or retransmission after the gap may be configured to start only at the boundary of a whole subframe, not a partial subframe, in an interval without the eDwPTS and eUpPTS, or in the eDwPTS and eUpPTS that satisfy a specific condition.

**[0245]** - - The eDwPTS (DwPTS) and eUpPTS (UpPTS) may not be included in the repetition transmission number count of NPDCCH, NPDSCH, NPUSCH, NPRACH, MPDCCH or PDSCH. In other words, the eNB and the UE may actually transmit a signal, a sequence or a channel in a corresponding interval, but such an operation may not affect the repetition number.

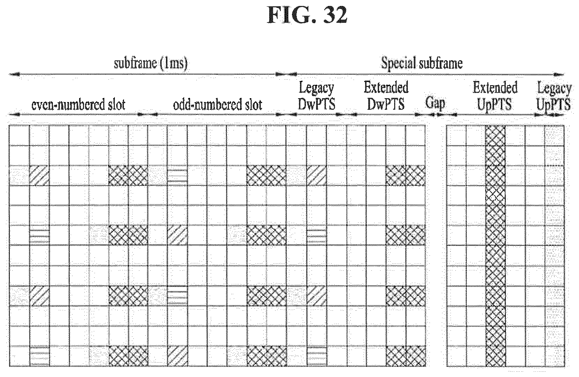

FIG. 32 is a diagram schematically illustrating configuration of eDwPTS and eUpPTS according to the example of FIG. 22.

More specifically, FIG. 32 illustrates that special subframe configuration 0-A of type-C (normal CP in DL and normal CP in UL) shown in FIG. 22 is applied and the same numerology is applied to configurations of the eDwPTS and eUpPTS. In FIG. 32, the reference signals in a grid pattern may be different from the structure of the normal subframes as described in the second proposal.

Here, the reference signal to be transmitted in the UpPTS or eUpPTS may be transmitted alone without NPUSCH. The reference signal may be used for channel quality measurement in the UE, or may be used to improve channel estimation performance of the NPUSCH that is transmitted in a subsequent normal subframe.

### 4.3. Third proposal: "Configuration of messages/information for extended special subframe configurations"

In order to apply eDwPTS and eUpPTS having the above-described features, a new message and information for an extended special subframe configuration may be defined. For this purpose, the existing table of special subframe configurations may be extended, or the following method may be defined.

(1) The table for the special subframe configurations defined in the legacy LTE system may be extended to include all or some of the structures of FIGs. 20 to 31.

- An element for extended special subframe configurations may be added to the TDD-Config information element.

For example, specialSubframePatterns ENUMERATED {ssp0, ssp1, ssp2, ssp3, ssp4,ssp5, ssp6, ssp7, ssp8, esspl, essp2,..., esspN} may be given, where essp-n denotes the n-th extended special subframe configuration among the N extended special subframe configurations that are newly added.

- Details about the eUpPTS may be added to tpc-SubframeSet of UplinkPowerControl field descriptions.
- Information about eUpPTS as well as UpPTS between cells may be further described in measSubframePatternNeigh of MeasObjectEUTRA field descriptions.
- Definition related to support of an extended special subframe may be added to tdd-SpecialSubframe in the UE-EUTRA-Capability field descriptions. Alternatively, tdd-eSpecialSubframe may be defined separately from the existing tdd-SpecialSubframe.

- - Here, the capability related to the extended special subframe support may be configured in a band-specific or band-agnostic manner.

- - When carrier aggregation (CA) is supported, the support of the extended special subframe may be defined in the form of a CA band combination. MIMO capabilities and naics-Capability-List-r12 may be used as exemplary parameters for configuring a capability in a CA band combination.

(2) A table for extended special subframe configurations may be additionally defined separately from the table for special subframe configurations defined in the legacy LTE system.

Extended special subframe configurations may be predefined in a band-specific or band-agnostic manner.

[0251] - A parameter related to the extended special subframe configurations may be (semi-)statically configured through a high-level signal/message in a cell-specific or UE-specific manner, or may be dynamically configured through DCI or the like in a cell-specific or UE-specific manner.

[0252] - - A parameter related to the extended special subframe configurations may be (semi-)statically configured through a high-level signal/message in a cell-specific manner, and the UE may expect the configured eDwPTS/eUpPTS application differently in every radio frame or in each radio frame of a specific period.

[0253] - Here, the extended special subframe configurations-related parameter (semi-)statically configured through a high-level signal/message in the cell-specific manner may be turned on/off by common DCI or UE-specific DCI.

Here, the time at which the configuration is dynamically overridden by the DCI may be applied in a corresponding subframe or a subframe/radio frame after a specific time.

(3) DL-Symb-Bitmap may be newly defined in a similar manner to the existing DL-Bitmap-NB-r13. Here, DL-Bitmap-NB-r13 represents a parameter indicating a subframe in which the NRS is transmitted and to which the NPDSCH resource can be allocated.

On the other hand, the DL-Symb-Bitmap represents a parameter indicating whether the DwPTS and UpPTS of the special subframe can be configured as an NB-IoT DL or UL valid subframe or further indicating the degree of extension of the eDwPTS and eUpPTS. Here, the UL valid subframe indicates a subframe in which the NPUSCH or a specific reference signal can be transmitted.

Hereinafter, signaling of whether to use the DwPTS/eDwPTS and the UpPTS/eUpPTS on a symbol-by-symbol basis through the DL-Symb-Bitmap and the UL-Symb-Bitmap will be described in detail.

[0258] - The DL-Symb-Bitmap and the UL-Symb-Bitmap may be configured differently according to the LTE special subframe configuration, may be applied with the same configuration in every special subframe, or may be repeatedly applied with a specific periodicity of a radio frame or more. Such configuration may be determined according to the size of the DL-Symb-Bitmap and the UL-Symb-Bitmap, or may be defined through other separate signaling.

[0259] - As an example, the DL-Symb-Bitmap may be defined by BIT STRING (SIZE (14 - (the number of OFDM symbols corresponding to the time that may include the UpPTS and the minimum switching gap)). In this case, the UE may interpret that OFDM symbols as many as the symbols indicated by '1' in the DL-Symb-Bitmap are available in the DwPTS period. If the UE ever knows the DwPTS, the difference between the number of symbols indicated by '1' and the number of OFDM symbols included in the DwPTS may correspond to the eDwPTS.

[0260] - As another example, the UL-Symb-Bitmap may be defined by BIT STRING (SIZE (14 - (the number of SC-FDMA symbols corresponding to the time that may include the DwPTS and the minimum switching gap)). In this case, the UE may interpret that SC-FDMA symbols as many as the symbols indicated by '1' in the UL-Symb-Bitmap are available in the UpPTS period. If the UE ever knows the UpPTS, the difference between the number of symbols indicated by '1' and the number of SC-FDMA symbols included in the UpPTS may correspond to the eUpPTS.

### 4.4. Fourth proposal: "Scheduling and operation for extended special subframes"

As described above, in the extended special subframes including the eDwPTS and the eUpPTS, the interpretation of the special subframes and operation of the eNB and the UE may have the following differences from the conventional cases.

(1) The UE may acquire complete special subframe configuration information by combining the conventional special subframe configuration parameter and an extended special subframe configuration parameter.

- Accordingly, when the conventional special subframe configuration parameter and the extended special subframe configuration parameter are combined, the understanding of the special subframe configuration and operation of a specific UE may be different from the case where the specific UE knows only the conventional special subframe configuration parameter.

(2) The eNB may schedule a UE which knows only the conventional special subframe configuration parameter differently from a UE which knows even the extended special subframe configuration parameter. In other words, in interpreting the same DCI, a UE capable of interpreting and using the extended special subframe may interpret and apply the DCI in contrast with UEs that are not capable of interpreting and using the extended special subframe, and the eNB may perform scheduling in expectation of such operation of the UE.

- Accordingly, the understanding of the special subframe configuration and operation of the specific eNB may differ between a case where a specific eNB provides only the conventional special subframe configuration parameter to the UEs in a cell and a case where the specific eNB provides even the extended special subframe configuration parameter.
- The eNB may be configured to have a constraint on scheduling of DwPTS/UpPTS or eDwPTS/eUpPTS according to an extended special subframe configuration in a neighboring cell.

(3) The eNB and the UE may apply definition of a subframe for radio resource management (RRM) or a CSI reference resource for CSI measurement, and operation related to radio link control (RLC) differently according to the DwPTS and the eDwPTS.

(4) The UE may not expect the eDwPTS/eUpPTS or assume the same extended special subframe configuration parameter as in the serving cell until it receives an extended special subframe configuration parameter for the serving cell or a target cell in hand-over.

(5) The eNB may allocate eDwPTS and/or eUpPTS to only UEs that do not apply DL and UL simultaneously in the same special subframe.

(6) If the UE receives a DL grant for a special subframe or a UL grant in the special subframe, it may ignore either the DwPTS/eDwPTS or the UpPTS/eUpPTS.

- As an example, if the UE receives a DL grant for the special subframe in the special subframe and the PDSCH or NPDSCH is allocated to the DwPTS, the UE may ignore the eDwPTS and the UpPTS or eUpPTS.
- As another example, if the UE receives a DL grant for a special subframe in the special subframe and the PDSCH or NPDSCH is allocated to the eDwPTS, the UE may ignore the UpPTS or the eUpPTS. Here, the DL grant may schedule an interval including the DwPTS period as well as the eDwPTS.
- As another example, if the UE receives a UL grant for a special subframe in the special subframe, and the PUSCH, PUCCH, or NPUSCH is allocated to the UpPTS, the UE may ignore the eUpPTS and the DwPTS or eDwPTS. Here, the UL grant may schedule an interval including the UpPTS period as well as the eUpPTS.

As another example, if the UE receives an UL grant for a special subframe in the special subframe, and the PUSCH, PUCCH, or NPUSCH is allocated to the eUpPTS, the UE may ignore the DwPTS or the eDwPTS. Here, the UL grant may schedule an interval including the UpPTS period as well as the eUpPTS.

### 4.5. Fifth proposal: "Control method for interference of extended special subframe"

In order to use the extended special subframe described above, an appropriate control technique for UL-to-DL or DL-to-UL interference is required. This issue may be overcome by the reception technique of the eNB or UE (e.g., advanced co-channel interference), but this approach may increase the decoding overhead of the eNB or UE.

In this section, a method that may overcome the issue by scheduling or DL-to-UL switching from the transmitter perspective when the above-described extended special subframe is applied will be described in detail.

(1) In Type-D of FIGs. 20 to 31, interference with DwPTS or eDwPTS may occur from UpPTS to which a great timing advanced value is applied. The interference may be overcome as follows.

- The eNB may avoid the interference by not allocating an uplink resource to the UpPTS for a UE having a timing advanced value greater than the interval excluding the DwPTS, the eDwPTS, and the UpPTS.
- The eNB may avoid the interference by allocating a resource to the eDwPTS only for UEs having a smaller timing advanced value than a UE having the greatest timing advanced value in the cell.
- The eNB may avoid interference by orthogonally allocating resources of the UpPTS and the DwPTS and/or eDwPTS in the frequency domain.

(2) In Type-U of FIGs. 20 to 31, interference with the DwPTS may occur from the eUpPTS or the UpPTS to which a great timing advanced value is applied. The interference may be overcome as follows.

- The eNB may avoid the interference by not allocating an uplink resource to the eUpPTS for a UE having a timing advanced value greater than the interval excluding the DwPTS, UpPTS, and eUpPTS.
- The eNB may avoid interference by orthogonally allocating resources of the DwPTS and the UpPTS and/or eUpPTS in the frequency domain.

(3) In Type-C of FIGs. 20 to 31, interference with the DwPTS or the eDwPTS may occur from the eUpPTS or the UpPTS to which a great timing advanced value is applied. The interference may be overcome as follows.

- If the sum of double the amount of timing advanced and the DL-to-UL switching time is smaller than the interval excluding the DwPTS, eDwPTS, eUpPTS, and UpPTS, the eNB may avoid the interference by allocating a DL resource and a UL resource to the eDwPTS and the eUpPTS in the same special subframe, respectively.
- The eNB may allocate only one of eDwPTS or eUpPTS to UEs that do not satisfy the above-mentioned condition.

(4) Additionally, to avoid interference between a legacy UE and a UE supporting eDwPTS/eUpPTS, the following methods may be considered.

- The interference applied to the eDwPTS from the legacy UpPTS may be avoided when the eNB applies localized resource allocation that avoids a band occupied by the eDwPTS for legacy UL.
- The interference applied from the eDwPTS to the legacy UpPTS may be avoided when the eNB applies localized resource allocation that avoids a band occupied by the eDwPTS for legacy UL.
- Interference is not applied to the eUpPTS from the legacy DwPTS in any case.
- Interference applied from the eUpPTS to the legacy DwPTS may be avoided when the eNB performs eUpPTS scheduling restriction according to each coverage enhancement (CE) level. In this case, repetition of a transmitted/received signal may be configured differently according to the CE level.

Additionally, even if a UE is allocated eDwPTS or eUpPTS from the eNB, the UE may not perform signal transmission in the allocated eDwPTS or eUpPTS if the TA for the UE is greater than or equal to a certain value. In other words, if the UE determines that interference is very likely to occur, the UE may not perform signal transmission/reception in the additionally extended interval.

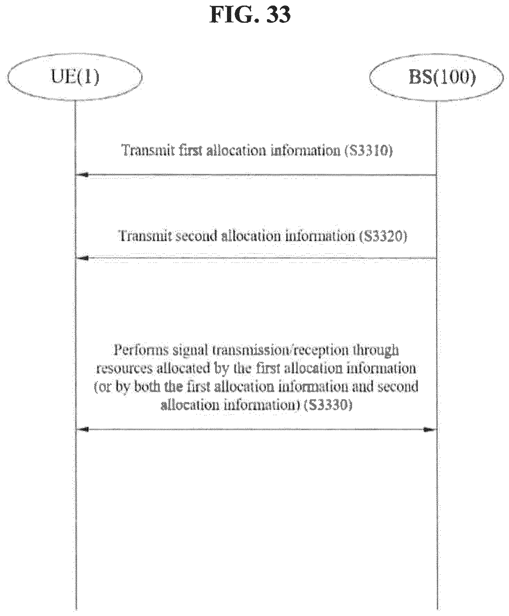

FIG. 33 is a diagram schematically illustrating a method of transmitting and receiving signals between a terminal and a base station according to the present invention.

First, a UE receives first allocation information from a BS (S3310) and receives second allocation information (S3320). Here, the first allocation information and the second allocation information may be received simultaneously or sequentially. In particular, when the first allocation information and the second allocation information are sequentially received, the second allocation information may be received prior to the first allocation information.

Here, the first allocation information indicates a first downlink region, a guard period (GP), and a first uplink region for a first time interval. The second allocation information indicates one or more of a second downlink region or second uplink region additionally allocated in the GP.

Then, according to the characteristics of the UE, the UE performs signal transmission/reception with the BS using only the resources allocated by the first allocation information or all resources allocated by the first allocation information and the second allocation information (S3330).

Here, the characteristics of the UE may include whether the UE is an NB-IoT UE. That is, if the UE is an NB-IoT UE, the UE may perform signal transmission/reception with the BS, using all resources allocated by the first allocation information and the second allocation information. On the other hand, if the UE is not an NB-IoT UE (e.g., the UE is a typical LTE UE), the UE may perform signal transmission/reception with the BS, using only resources allocated by the first allocation information.

Alternatively, the characteristics of the UE may include a coverage enhancement (CE) mode of the UE or a CE level of the UE. If the CE mode of the UE is a specific CE mode or the CE level of the UE is a specific CE level (or is within a specific CE level range), the UE may perform signal transmission/reception with the BS, using all resources allocated by the first allocation information and the second allocation information.

In the above-described configuration, one subframe may be applied as the first time interval. As an example, if the wireless communication system is an LTE system, the subframe may correspond to a special subframe. As another example, when the wireless communication system is an NR system, the subframe may correspond to one or more slots.

Alternatively, in the configuration described above, the first time interval may correspond to one slot of the NR system.

In this case, the first allocation information may include configuration information about the first time interval and information indicating the number of additional symbols for the first uplink region. As an example, the first allocation information may include srs-UpPtsAdd parameter information defined in the LTE system and special subframe configuration information.

The second allocation information may include at least one of the number of downlink symbols or the number of uplink symbols that are additionally allocated in the GP.

In the above-described configurations, the time interval excluding the resource region that is additionally allocated in the GP according to the second allocation information may be configured to be at least 20 microseconds or more. Accordingly, the UE may secure at least 20 microseconds as a time interval for DL-to-UL switching.

In addition, when the second allocation information indicates the second downlink region additionally allocated in the GP, the UE may receive, through the second downlink region, a narrow physical downlink shared channel (NPDSCH) or a reference signal having a quasi-co-located (QCL) relationship with the reference signal transmitted in the first downlink region.

In addition, when the second allocation information indicates the second uplink region additionally allocated in the GP, the UE may transmit, through the second uplink region, a narrow physical uplink shared channel (NPUSCH) or a reference signal having a quasi-co-located (QCL) relationship with the reference signal transmitted in the first uplink region.

Here, as shown in FIG. 20, the second downlink region may be configured with the same cyclic prefix (CP) as the first downlink region, and the second uplink region may be configured with the same CP as the first uplink region. Alternatively, the second downlink region may be configured with a CP (e.g., the same CP or a different CP) determined independently of the first downlink region, and the second uplink region may also be configured with a CP determined independently of the first uplink region.

In accordance with the signal transmission/reception method of the UE described above, the BS may also transmit and receive signals to/from the UE.

Since examples of the above-described proposal method may also be included in one of implementation methods of the present invention, it is obvious that the examples are regarded as a sort of proposed methods. Although the above-proposed methods may be independently implemented, the proposed methods may be implemented in a combined (aggregated) form of a part of the proposed methods. A rule may be defined such that the base station informs the UE of information as to whether the proposed methods are applied (or information about rules of the proposed methods) through a predefined signal (e.g., a physical layer signal or a higher-layer signal).

## 5. Device configuration

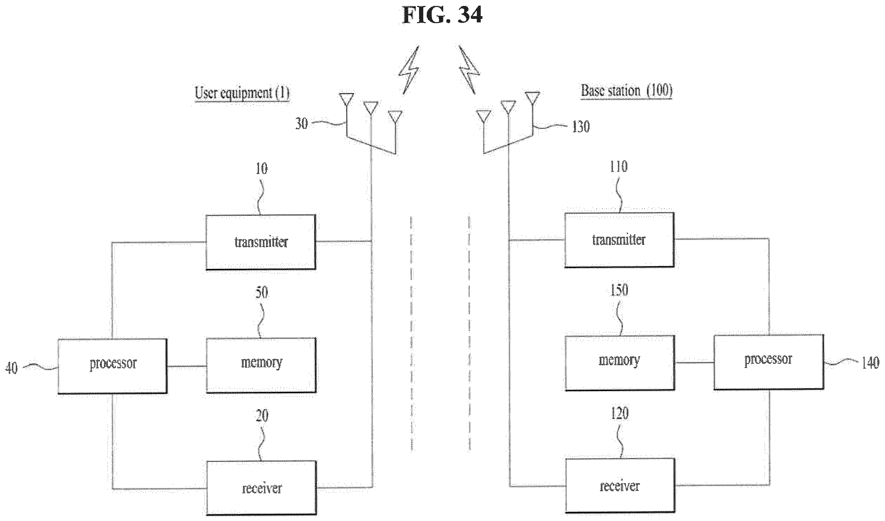

FIG. 34 is a diagram illustrating construction of a UE and a base station in which proposed embodiments can be implemented. The UE and the BS shown in FIG. 34 operate to implement the above-described embodiments of the method for signal transmission/reception between the UE and the BS.

UE 1 may act as a transmission end on UL and as a reception end on DL. BS (eNB or gNB) 100 may act as a reception end on UL and as a transmission end on DL.

That is, each of the UE and the BS may include a Transmitter (Tx) 10 or 110 and a Receiver (Rx) 20 or 120, for controlling transmission and reception of information, data, and/or messages, and an antenna 30 or 130 for transmitting and receiving information, data, and/or messages.

Each of the UE and the BS may further include a processor 40 or 140 for implementing the above-described embodiments of the present disclosure and a memory 50 or 150 for temporarily or permanently storing operations of the processor 40 or 140.

UE 1 configured as described above receives, through the receiver 20, first allocation information indicating a first downlink region, a guard period (GP), and a first uplink region for a first time interval, and second allocation information indicating one or more of a second downlink region or a second uplink region additionally allocated in the GP. Then, according to the characteristics of UE 1, the UE 1 performs signal transmission/reception with the BS through the processor 40 in the first time interval, using only the first downlink region and the first uplink region, or using the first downlink region, the first uplink region, and one or more of the second downlink region or the second uplink region indicated by the second allocation information.

As a corresponding operation, BS 100 transmits first allocation information indicating a first downlink region, a guard period (GP) and a first uplink region for a first time interval through the transmitter 110, and transmits second allocation information indicating one or more of a second downlink region or a second uplink region additionally allocated in the GP. Then, according to the characteristics of the UE 1, BS 100 performs signal transmission/reception with the UE through the processor 140 in the first time interval, using only the first downlink region and the first uplink region, or using the first downlink region, the first uplink region, and one or more of the second downlink region or the second uplink region indicated by the second allocation information.

The Tx and Rx of the UE and the base station may perform a packet modulation/demodulation function for data transmission, a high-speed packet channel coding function, OFDM packet scheduling, TDD packet scheduling, and/or channelization. Each of the UE and the base station of FIG. 20 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present disclosure may be achieved by various means, for example, hardware, firmware, software, or a combination thereof.

In a hardware configuration, the methods according to exemplary embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present disclosure may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

The above embodiments are therefore to be construed in all aspects as illustrative and not restrictive. The scope of the disclosure should be determined by the appended claims.

[Industrial Applicability]

The present disclosure is applicable to various wireless access systems including a 3GPP system, and/or a 3GPP2 system. Besides these wireless access systems, the embodiments of the present disclosure are applicable to all technical fields in which the wireless access systems find their applications. Moreover, the proposed method can also be applied to mmWave communication using an ultra-high frequency band.

**Claims**

1. A method of transmitting and receiving, by a terminal, signals to and from a base station in a wireless communication system supporting Narrow Band Internet of Things, NB-IoT, the method comprising:

   receiving first allocation information indicating a first downlink region, a guard period, GP, and a first uplink region for a first time interval;
   receiving second allocation information indicating one or more of a second downlink region or a second uplink region additionally allocated in the GP; and
   performing signal transmission and reception with the base station in the first time interval according to characteristics of the terminal, using only the first downlink region and the first uplink region or using the first downlink region, the first uplink region, and the one or more of the second downlink region or the second uplink region indicated by the second allocation information.

2. The method of claim 1, wherein the characteristics of the terminal comprise whether the terminal is an NB-IoT terminal.

3. The method of claim 1, wherein the characteristics of the terminal comprise a coverage enhancement, CE, mode of the terminal or a CE level of the terminal.

4. The method of claim 1, wherein the first time interval is one subframe.

5. The method of claim 1, wherein the first allocation information comprises:
configuration information about the first time interval and information indicating the number of additional symbols for the first uplink region.

6. The method of claim 1, wherein the second allocation information comprises:
one or more of the number of downlink symbols additionally allocated in the GP or the number of uplink symbols additionally allocated in the GP.

7. The method of claim 1, wherein a time interval except for a resource region additionally allocated in the GP by the second allocation information is at least 20 microseconds or more.

8. The method of claim 1, wherein, when the second allocation information indicates the second downlink region additionally allocated in the GP,
the terminal receives, through the second downlink region, a narrow physical downlink shared channel, NPDSCH, or a reference signal having a quasi-co-located, QCL, relationship with a reference signal transmitted in the first downlink region.

9. The method of claim 1, wherein, when the second allocation information indicates the second downlink region additionally allocated in the GP,
the terminal transmits, through the second uplink region, a narrow physical uplink shared channel, NPUSCH, or a reference signal having a quasi-co-located, QCL, relationship with a reference signal transmitted in the first uplink region.

10. The method of claim 1, wherein the second downlink region is configured with the same cyclic prefix, CP, as the first downlink region,
wherein the second uplink region is configured with the same CP as the first uplink region.

11. A method of transmitting and receiving, by a base station, signals to and from a terminal in a wireless communication system supporting Narrow Band Internet of Things, NB-IoT, the method comprising:

transmitting first allocation information indicating a first downlink region, a guard period, GP, and a first uplink region for a first time interval;
transmitting second allocation information indicating one or more of a second downlink region or a second uplink region additionally allocated in the GP; and
performing signal transmission and reception with the terminal in the first time interval according to characteristics of the terminal, using only the first downlink region and the first uplink region or using the first downlink region, the first uplink region, and the one or more of the second downlink region or the second uplink region indicated by the second allocation information.

12. A terminal for transmitting and receiving signals to and from a base station in a wireless communication system supporting Narrow Band Internet of Things, NB-IoT, the terminal comprising:

a transmitter (175);
a receiver (140); and
a processor (155) operatively coupled to the transmitter (175) and the receiver (140),
wherein the processor (155) is configured to:

receive first allocation information indicating a first downlink region, a guard period, GP, and a first uplink region for a first time interval;
receive second allocation information indicating one or more of a second downlink region or a second uplink region additionally allocated in the GP; and
perform signal transmission and reception with the base station in the first time interval according to characteristics of the terminal, using only the first downlink region and the first uplink region or using the first downlink region, the first uplink region, and the one or more of the second downlink region or the second uplink region indicated by the second allocation information.

13. A base station for transmitting and receiving signals to and from a terminal in a wireless communication system supporting Narrow Band Internet of Things, NB-IoT, the base station comprising:

a transmitter (125);
a receiver (190); and
a processor (180) operatively coupled to the transmitter (125) and the receiver (190),
wherein the processor (180) is configured to:

transmit first allocation information indicating a first downlink region, a guard period, GP, and a first uplink region for a first time interval;
transmit second allocation information indicating one or more of a second downlink region or a second uplink region additionally allocated in the GP; and
perform signal transmission and reception with the terminal in the first time interval according to characteristics of the terminal, using only the first downlink region and the first uplink region or using the first downlink region, the first uplink region, and the one or more of the second downlink region or the second uplink region indicated by the second allocation information.

**Patentansprüche**

1. Verfahren zum Senden und Empfangen von Signalen zu und von einer Basisstation in einem Drahtloskommunikationssystem mit Unterstützung von schmalbandigem Internet der Dinge, NB-IoT, durch ein Endgerät, wobei das Verfahren umfasst:

Empfangen erster Zuweisungsinformationen, die einen ersten Downlink-Bereich, eine Schutzperiode, GP, und einen ersten Uplink-Bereich für ein erstes Zeitintervall angeben;
Empfangen zweiter Zuweisungsinformationen, die einen oder mehrere eines zweiten Downlink-Bereichs oder eines zweiten Uplink-Bereichs angeben, die zusätzlich in der GP zugewiesen sind; und
Durchführen einer Signalübertragung und eines Signalempfangs mit der Basisstation im ersten Zeitintervall gemäß Eigenschaften des Endgeräts unter Verwendung nur des ersten Downlink-Bereichs und des ersten Uplink-Bereichs oder unter Verwendung des ersten Downlink-Bereichs, des ersten Uplink-Bereichs und eines oder mehrerer des zweiten Downlink-Bereichs oder des zweiten Uplink-Bereichs, die durch die zweiten Zuordnungsinformationen angegeben werden.

2. Verfahren nach Anspruch 1, wobei die Eigenschaften des Endgeräts umfassen, ob das Endgerät ein NB-IoT-Endgerät ist.

3. Verfahren nach Anspruch 1, wobei die Eigenschaften des Endgeräts einen Abdeckungsverbesserungs-, CE, Modus des Endgeräts oder ein CE-Niveau des Endgeräts umfassen.

4. Verfahren nach Anspruch 1, wobei das erste Zeitintervall ein Unterrahmen ist.

5. Verfahren nach Anspruch 1, wobei die ersten Zuweisungsinformationen umfassen:
Konfigurationsinformationen über das erste Zeitintervall und Informationen, die die Anzahl zusätzlicher Symbole für den ersten Uplink-Bereich angeben.

6. Verfahren nach Anspruch 1, wobei die zweiten Zuweisungsinformationen umfassen:
eines oder mehrere der Anzahl von Downlink-Symbolen, die zusätzlich in der GP zugewiesen sind, oder der Anzahl von Uplink-Symbolen, die zusätzlich in der GP zugewiesen sind.

7. Verfahren nach Anspruch 1, wobei ein Zeitintervall mit Ausnahme eines Ressourcenbereichs, der zusätzlich in der GP durch die zweiten Zuweisungsinformationen zugewiesen ist, zumindest 20 Mikrosekunden oder mehr beträgt.

8. Verfahren nach Anspruch 1, wobei, wenn die zweiten Zuweisungsinformationen den zweiten Downlink-Bereich angeben, der zusätzlich in der GP zugewiesen ist,

das Endgerät über den zweiten Downlink-Bereich einen schmalbandigen physikalischen gemeinsam genutzten Downlink-Kanal, NPDSCH, oder ein Referenzsignal mit einer Quasikollokations-, QCL, Beziehung mit einem in dem ersten Downlink-Bereich gesendeten Referenzsignal empfängt.

9. Verfahren nach Anspruch 1, wobei, wenn die zweiten Zuweisungsinformationen den zweiten Downlink-Bereich angeben, der zusätzlich in der GP zugewiesen ist,
das Endgerät über den zweiten Uplink-Bereich einen schmalbandigen physikalischen gemeinsam genutzten Downlink-Kanal, NPDSCH, oder ein Referenzsignal mit einer Quasikollokations-, QCL, Beziehung mit einem in dem ersten Downlink-Bereich gesendeten Referenzsignal sendet.

10. Verfahren nach Anspruch 1, wobei der zweite Downlink-Bereich mit demselben zyklischen Präfix, CP, wie der erste Downlink-Bereich eingerichtet ist,
wobei der zweite Uplink-Bereich mit dem gleichen CP wie der erste Uplink-Bereich eingerichtet ist.

11. Verfahren zum Senden und Empfangen von Signalen zu und von einem Endgerät in einem Drahtloskommunikationssystem mit Unterstützung von schmalbandigem Internet der Dinge, NB-IoT, durch eine Basisstation, wobei das Verfahren umfasst:

Senden erster Zuweisungsinformationen, die einen ersten Downlink-Bereich, eine Schutzperiode, GP, und einen ersten Uplink-Bereich für ein erstes Zeitintervall angeben;
Senden zweiter Zuweisungsinformationen, die einen oder mehrere eines zweiten Downlink-Bereichs oder eines zweiten Uplink-Bereichs angeben, die zusätzlich in der GP zugewiesen sind; und
Durchführen einer Signalübertragung und eines Signalempfangs mit dem Endgerät im ersten Zeitintervall gemäß Eigenschaften des Endgeräts unter Verwendung nur des ersten Downlink-Bereichs und des ersten Uplink-Bereichs oder unter Verwendung des ersten Downlink-Bereichs, des ersten Uplink-Bereichs und eines oder mehrerer des zweiten Downlink-Bereichs oder des zweiten Uplink-Bereichs, die durch die zweiten Zuordnungsinformationen angegeben werden.

12. Endgerät zum Senden und Empfangen von Signalen zu und von einer Basisstation in einem Drahtloskommunikationssystem mit Unterstützung von schmalbandigem Internet der Dinge, NB-IoT, wobei das Endgerät umfasst:

einen Sender (175);
einen Empfänger (140); und
einen Prozessor (155), der betriebsmäßig mit dem Sender (175) und dem Empfänger (140) gekoppelt ist,
wobei der Prozessor (155) eingerichtet ist zum:

Empfangen erster Zuweisungsinformationen, die einen ersten Downlink-Bereich, eine Schutzperiode, GP, und einen ersten Uplink-Bereich für ein erstes Zeitintervall angeben;
Empfangen zweiter Zuweisungsinformationen, die einen oder mehrere eines zweiten Downlink-Bereichs oder eines zweiten Uplink-Bereichs angeben, die zusätzlich in der GP zugewiesen sind; und
Durchführen einer Signalübertragung und eines Signalempfangs mit der Basisstation im ersten Zeitintervall gemäß Eigenschaften des Endgeräts unter Verwendung nur des ersten Downlink-Bereichs und des ersten Uplink-Bereichs oder unter Verwendung des ersten Downlink-Bereichs, des ersten Uplink-Bereichs und eines oder mehrerer des zweiten Downlink-Bereichs oder des zweiten Uplink-Bereichs, die durch die zweiten Zuordnungsinformationen angegeben werden.

13. Basisstation zum Senden und Empfangen von Signalen zu und von einem Endgerät in einem Drahtloskommunikationssystem mit Unterstützung von schmalbandigem Internet der Dinge, NB-IoT, wobei die Basisstation umfasst:

einen Sender (125);
einen Empfänger (190); und
einen Prozessor (180), der betriebsmäßig mit dem Sender (125) und dem Empfänger (190) gekoppelt ist,
wobei der Prozessor (180) eingerichtet ist zum:

Senden erster Zuweisungsinformationen, die einen ersten Downlink-Bereich, eine Schutzperiode, GP, und einen ersten Uplink-Bereich für ein erstes Zeitintervall angeben;
Senden zweiter Zuweisungsinformationen, die einen oder mehrere eines zweiten Downlink-Bereichs oder eines zweiten Uplink-Bereichs angeben, die zusätzlich in der GP zugewiesen sind; und

Durchführen einer Signalübertragung und eines Signalempfangs mit dem Endgerät im ersten Zeitintervall gemäß Eigenschaften des Endgeräts unter Verwendung nur des ersten Downlink-Bereichs und des ersten Uplink-Bereichs oder unter Verwendung des ersten Downlink-Bereichs, des ersten Uplink-Bereichs und eines oder mehrerer des zweiten Downlink-Bereichs oder des zweiten Uplink-Bereichs, die durch die zweiten Zuordnungsinformationen angegeben werden.

**Revendications**

1. Procédé d'émission et de réception, par un terminal, de signaux provenant d'une station de base et à destination de cette dernière, dans un système de communication sans fil prenant en charge l'Internet des objets à bande étroite, NB-IoT, le procédé consistant à :

recevoir des premières informations d'attribution indiquant une première région descendante, une période de garde, GP et une première région montante pour un premier intervalle de temps ;
recevoir des secondes informations d'attribution indiquant une ou plusieurs parmi une seconde région descendante ou une seconde région montante attribuées en plus dans la GP ; et
procéder à l'émission et la réception de signaux avec la station de base dans le premier intervalle de temps conformément aux caractéristiques du terminal, à l'aide uniquement de la première région descendante et de la première région montante ou à l'aide de la première région descendante, de la première région montante, et une ou plusieurs parmi la seconde région descendante ou de la seconde région montante indiquées par les secondes informations d'attribution.

2. Procédé selon la revendication 1, dans lequel les caractéristiques du terminal comprennent le fait que le terminal est un terminal NB-IoT.

3. Procédé selon la revendication 1, dans lequel les caractéristiques du terminal comprennent un mode d'amélioration de couverture, CE, du terminal ou d'un niveau CE du terminal.

4. Procédé selon la revendication 1, dans lequel le premier intervalle de temps est une sous-trame.

5. Procédé selon la revendication 1, dans lequel les premières informations d'attribution comprennent :
des informations de configuration concernant le premier intervalle de temps et des informations indiquant le nombre de symboles supplémentaires pour la première région montante.

6. Procédé selon la revendication 1, dans lequel les secondes informations d'attribution comprennent :
un ou plusieurs parmi le nombre de symboles descendants attribués en plus dans la GP ou le nombre de symboles montants attribués en plus dans la GP.

7. Procédé selon la revendication 1, dans lequel un intervalle de temps sauf pour une région de ressources attribuée en plus dans la GP par les secondes informations d'attribution est au moins de 20 microsecondes ou plus.

8. Procédé selon la revendication 1, dans lequel, lorsque les secondes informations d'attribution indiquant la seconde région descendante attribuée en plus dans la GP,
le terminal reçoit par la seconde région descendante, un canal physique étroit partagé descendant, NPDSCH, ou un signal de référence ayant une relation quasi co-localisation, QCL, avec un signal de référence transmis dans la première région descendante.

9. Procédé selon la revendication 1, dans lequel, lorsque les secondes informations d'attribution indiquent la seconde région descendante attribuée en plus dans la GP,
le terminal transmet, par la seconde région montante, un canal physique étroit partagé montant, NPUSCH, ou un signal de référence signal ayant une relation quasi co-localisation, QCL, avec un signal de référence transmis dans la première région montante.

10. Procédé selon la revendication 1, dans lequel la seconde région descendante est configurée avec le même préfixe cyclique, CP, que la première région descendante,
la seconde région montante étant configurée avec le même CP que la première région montante.

**11.** Procédé d'émission et de réception, par un base terminal, de signaux provenant d'un terminal et à destination de ce dernier, dans un système de communication sans fil prenant en charge l'Internet des objets à bande étroite, NB-IoT, le procédé consistant à :

transmettre des premières informations d'attribution indiquant une première région descendante, une période de garde, GP, et une première région montante pour un premier intervalle de temps ;
transmettre des secondes informations d'attribution indiquant une ou plusieurs parmi une seconde région descendante ou une seconde région montante attribuées en plus dans la GP ; et
procéder à l'émission et la réception de signaux avec le terminal dans le premier intervalle de temps conformément aux caractéristiques du terminal, à l'aide uniquement de la première région descendante et de la première région montante ou à l'aide de la première région descendante, de la première région montante, et une ou plusieurs parmi la seconde région descendante ou de la seconde région montante indiquées par les secondes informations d'attribution.

**12.** Procédé d'émission et de réception de signaux par et à destination d'une station de base dans un système de communication sans fil prenant en charge l'Internet des objets à bande étroite, NB-IoT, le terminal comprenant :

un émetteur (175);
un récepteur (140) ; et
un processeur (155) couplé fonctionnellement à l'émetteur (175) et au récepteur (140),
dans lequel le processeur (155) est configuré pour :

recevoir des premières informations d'attribution indiquant une première région descendante, une période de garde, GP et une première région montante pour un premier intervalle de temps ;
recevoir des secondes informations d'attribution indiquant une ou plusieurs parmi une seconde région descendante ou une seconde région montante attribuées en plus dans la GP ; et
procéder à l'émission et la réception de signaux avec la station de base dans le premier intervalle de temps conformément aux caractéristiques du terminal, à l'aide uniquement de la première région descendante et de la première région montante ou à l'aide de la première région descendante, de la première région montante, et une ou plusieurs parmi la seconde région descendante ou de la seconde région montante indiquées par les secondes informations d'attribution.

**13.** Station de base pour l'émission et la réception de signaux par et à destination d'un terminal dans un système de communication sans fil prenant en charge l'Internet des objets à bande étroite, NB-IoT, la station de base comprenant :

un émetteur (125);
un récepteur (190) ; et
un processeur (180) couplé fonctionnellement à l'émetteur (125) et au récepteur (190),
dans lequel le processeur (180) est configuré pour :

transmettre des premières informations d'attribution indiquant une première région descendante, une période de garde, GP, et une première région montante pour un premier intervalle de temps ;
transmet des secondes informations d'attribution indiquant une ou plusieurs parmi une seconde région descendante ou une seconde région montante attribuées en plus dans le GP ; et
procède à l'émission et la réception de signaux avec le terminal dans le premier intervalle de temps conformément aux caractéristiques du terminal, à l'aide uniquement de la première région descendante et de la première région montante ou à l'aide de la première région descendante, de la première région montante, et une ou plusieurs parmi la seconde région descendante ou de la seconde région montante indiquées par les secondes informations d'attribution.

# FIG. 1

Initial Cell Search — S101: P/S - SCH & [DLRS] & PBCH

System Information Reception — S102: PDCCH/PDSCH (BCCH)

Random Access Procedure — S103: PRACH, S104: PDCCH/PDSCH, S105: PRACH, S106: PDCCH/PDSCH

General DL/UL Tx/Rx S108 — S107: PDCCH/PDSCH, PUSCH/PUCCH

• DL/UL ACK/NACK
• UE CQI/PMI/Rank Report using PUSCH/PUCCH

# FIG. 2

Radio frame

| Slot | | | | | |
|------|------|------|------|------|------|
| # 0 | # 1 | # 2 | · · · | # 18 | # 19 |

Subframe

( a )

One radio frame, $T_f$=307200$T_s$= 10ms

One half-frame, $T_s$=153600T = 5ms

One slot,
$T_{slot}$=15360$T_s$

30720$T_s$

| Subframe#0 | | | Subframe#2 | Subframe#3 | Subframe#4 | Subframe#5 | | | Subframe#7 | Subframe#8 | Subframe#9 |

One subframe,
30720$T_s$

DwPTS  GP  UpPTS

DwPTS  GP  UpPTS

( b )

# FIG. 3

# FIG. 4

# FIG. 5

# FIG. 6

# FIG. 7

# FIG. 8

# FIG. 9

# FIG. 10

# FIG. 11

DC subcarrier

180kHz

| 10MHz BW, 50 PRBs | 18 | 19 | 20 | 21 | 22 | 23 | 24 | 25 | 26 | 27 | 28 | 29 | 30 | 31 |

97.5kHz          900kHz

# FIG. 12

Even numbered frame (10ms)          Odd numbered frame (10ms)

12 subcarriers (180kHz)

| 0 | 1 | 2 | 3 | 4 | 5 | 6 | 7 | 8 | 9 | 0 | 1 | 2 | 3 | 4 | 5 | 6 | 7 | 8 | 9 |

Subframe (1ms)

NPBCH    NPDCCH (NPDSCH)    NPSS    NSSS

# FIG. 13

Subframe 0 Subframe 1 Subframe 2 Subframe 3 Subframe 4 Subframe 5 Subframe 6 Subframe 7 Subframe 8 Subframe 9

180kHz (12subcarriers)

1ms

NB-PBCH
NB-PSS
NB-SSS
LTE CRS

42

# FIG. 14

EP 3 584 988 B1

# FIG. 15

Special subframe (1ms)

44

# FIG. 16

Special subframe (1ms)

# FIG. 17

Special subframe (1ms)

| | | | | | | | | | | | | | |
|---|---|---|---|---|---|---|---|---|---|---|---|---|---|
| 0-A (3,1) | 0D | 1D | 2D | | | | | | | | | | 11U |
| 0-B (3,3) | 0D | 1D | 2D | | | | | | 9U | 10U | | | 11U |
| 0-C (3,5) | 0D | 1D | 2D | | | | 7U | 8U | 9U | | | | 11U |
| 1-A (8,1) | 0D | 1D | 2D | 3D | 4D | 5D | 6D | 7D | | | | | 11U |
| 1-B (8,3) | 0D | 1D | 2D | 3D | 4D | 5D | 6D | 7D | 9U | 10U | | | 11U |
| 2-A (9,1) | 0D | 1D | 2D | 3D | 4D | 5D | 6D | 7D | 8D | | | | 11U |
| 3-A (10,1) | 0D | 1D | 2D | 3D | 4D | 5D | 6D | 7D | 8D | 9D | | | 11U |
| 4-A (3,2) | 0D | 1D | 2D | | | | | | 10U | | | | 11U |
| 4-B (3,4) | 0D | 1D | 2D | | | | | 8U | 9U | 10U | | | 11U |
| 4-C (3,6) | 0D | 1D | 2D | | | 6U | 7U | 8U | 9U | 10U | | | 11U |
| 5-A (8,2) | 0D | 1D | 2D | 3D | 4D | 5D | 6D | 7D | | 10U | | | 11U |
| 6-A (9,2) | 0D | 1D | 2D | 3D | 4D | 5D | 6D | 7D | 8D | 10U | | | 11U |
| 7-A (5,2) | 0D | 1D | 2D | 3D | 4D | | | | 10U | | | | 11U |
| 7-B (5,4) | 0D | 1D | 2D | 3D | 4D | | | 8U | 9U | 10U | | | 11U |
| 7-C (5,6) | 0D | 1D | 2D | 3D | 4D | 6U | 7U | 8U | 9U | 10U | | | 11U |

# FIG. 18

Special subframe (1ms)

| Extended CP | 0 | 1 | 2 | 3 | 4 | 5 | 6 | 7 | 8 | 9 | 10 | 11 | |
|---|---|---|---|---|---|---|---|---|---|---|---|---|---|
| Normal CP | 0 | 1 | 2 | 3 | 4 | 5 | 6 | 7 | 8 | 9 | 10 | 11 | 12 | 13 |

[ nD ] $n_{th}$ downlink OFDM symbol      [ nU ] $n_{th}$ uplink SC-FDMA symbol

# FIG. 19

$\boxed{\begin{smallmatrix} n \\ D \end{smallmatrix}}$  $n_{th}$ downlink OFDM symbol

$\boxed{\begin{smallmatrix} n \\ aD \end{smallmatrix}}$  $n_{th}$ additional downlink OFDM symbol

$\boxed{\begin{smallmatrix} n \\ U \end{smallmatrix}}$  $n_{th}$ uplink SC-FDMA symbol

$\boxed{\begin{smallmatrix} n \\ aU \end{smallmatrix}}$  $n_{th}$ additonal uplink SC-FDMA symbol

## FIG. 20

Special subframe (1ms)

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0-A (3,1) | D | D | D | aD | aD | aD | aD | aD | aD | aD | aD | aD | | U |
| 0-B (3,3) | D | D | D | aD | aD | aD | aD | aD | aD | aD | | U | U | U |
| 0-C (3,5) | D | D | D | aD | aD | aD | aD | aD | | U | U | U | U | U |
| 1-A (9,1) | D | D | D | D | D | D | D | D | D | aD | aD | aD | | U |
| 1-B (9,3) | D | D | D | D | D | D | D | D | D | aD | | U | U | U |
| 2-A (10,1) | D | D | D | D | D | D | D | D | D | D | aD | aD | | U |
| 2-B (10,3) | D | D | D | D | D | D | D | D | D | D | | U | U | U |
| 3-A (11,1) | D | D | D | D | D | D | D | D | D | D | D | aD | | U |
| 4-A (12,1) | D | D | D | D | D | D | D | D | D | D | D | D | | U |
| 5-A (3,2) | D | D | D | aD | aD | aD | aD | aD | aD | aD | aD | | U | U |
| 5-B (3,4) | D | D | D | aD | aD | aD | aD | aD | aD | | U | U | U | U |
| 5-C (3,6) | D | D | D | aD | aD | aD | aD | | U | U | U | U | U | U |
| 6-A (9,2) | D | D | D | D | D | D | D | D | D | aD | aD | | U | U |
| 6-A (9,4) | D | D | D | D | D | D | D | D | D | | U | U | U | U |
| 7-A (10,2) | D | D | D | D | D | D | D | D | D | D | aD | | U | U |
| 8-A (11,2) | D | D | D | D | D | D | D | D | D | D | D | | U | U |
| 9-A (6,2) | D | D | D | D | D | D | aD | aD | aD | aD | aD | | U | U |
| 9-B (6,4) | D | D | D | D | D | D | aD | aD | aD | | U | U | U | U |
| 9-C (6,6) | D | D | D | D | D | D | aD | | U | U | U | U | U | U |

# FIG. 21

Special subframe (1ms)

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0-A (3,1) | D | D | D | | aU | aU | aU | aU | aU | aU | aU | aU | aU | U |
| 0-B (3,3) | D | D | D | | aU | aU | aU | aU | aU | aU | aU | U | U | U |
| 0-C (3,5) | D | D | D | | aU | aU | aU | aU | aU | U | U | U | U | U |
| 1-A (9,1) | D | D | D | D | D | D | D | D | D | | aU | aU | aU | U |
| 1-B (9,3) | D | D | D | D | D | D | D | D | D | | aU | U | U | U |
| 2-A (10,1) | D | D | D | D | D | D | D | D | D | D | | aU | aU | U |
| 2-B (10,3) | D | D | D | D | D | D | D | D | D | D | | U | U | U |
| 3-A (11,1) | D | D | D | D | D | D | D | D | D | D | D | | aU | U |
| 4-A (12,1) | D | D | D | D | D | D | D | D | D | D | D | D | | U |
| 5-A (3,2) | D | D | D | | aU | aU | aU | aU | aU | aU | aU | aU | U | U |
| 5-B (3,4) | D | D | D | | aU | aU | aU | aU | aU | aU | U | U | U | U |
| 5-C (3,6) | D | D | D | | aU | aU | aU | aU | U | U | U | U | U | U |
| 6-A (9,2) | D | D | D | D | D | D | D | D | D | | aU | aU | U | U |
| 6-A (9,4) | D | D | D | D | D | D | D | D | D | | U | U | U | U |
| 7-A (10,2) | D | D | D | D | D | D | D | D | D | D | | aU | U | U |
| 8-A (11,2) | D | D | D | D | D | D | D | D | D | D | D | | U | U |
| 9-A (6,2) | D | D | D | D | D | D | | aU | aU | aU | aU | aU | U | U |
| 9-B (6,4) | D | D | D | D | D | D | | aU | aU | aU | U | U | U | U |
| 9-C (6,6) | D | D | D | D | D | D | | aU | U | U | U | U | U | U |

# FIG. 22

Special subframe (1ms)

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0-A (3,1) | D | D | D | aD | aD | aD | aD | | aU | aU | aU | aU | aU | U |
| 0-B (3,3) | D | D | D | aD | aD | aD | aD | | aU | aU | aU | U | U | U |
| 0-C (3,5) | D | D | D | aD | aD | aD | aD | | aU | U | U | U | U | U |
| 1-A (9,1) | D | D | D | D | D | D | D | D | D | aD | | aU | aU | U |
| 1-B (9,3) | D | D | D | D | D | D | D | D | D | aD | | U | U | U |
| 2-A (10,1) | D | D | D | D | D | D | D | D | D | D | aD | | aU | U |
| 2-B (10,3) | D | D | D | D | D | D | D | D | D | D | | U | U | U |
| 3-A (11,1) | D | D | D | D | D | D | D | D | D | D | D | | aU | U |
| 4-A (12,1) | D | D | D | D | D | D | D | D | D | D | D | D | | U |
| 5-A (3,2) | D | D | D | aD | aD | aD | aD | | aU | aU | aU | aU | U | U |
| 5-B (3,4) | D | D | D | aD | aD | aD | aD | | aU | aU | U | U | U | U |
| 5-C (3,6) | D | D | D | aD | aD | | aU | aU | U | U | U | U | U | U |
| 6-A (9,2) | D | D | D | D | D | D | D | D | D | aD | | aU | U | U |
| 6-A (9,4) | D | D | D | D | D | D | D | D | D | | U | U | U | U |
| 7-A (10,2) | D | D | D | D | D | D | D | D | D | D | | aU | U | U |
| 8-A (11,2) | D | D | D | D | D | D | D | D | D | D | D | | U | U |
| 9-A (6,2) | D | D | D | D | D | D | aD | | aU | aU | aU | aU | U | U |
| 9-B (6,4) | D | D | D | D | D | D | aD | | aU | aU | U | U | U | U |
| 9-C (6,6) | D | D | D | D | D | D | aD | | U | U | U | U | U | U |

# FIG. 23

Special subframe (1ms)

| | 0 | 1 | 2 | 3 | 4 | 5 | 6 | 7 | 8 | 9 | 10 | 11 | | 11 |
|---|---|---|---|---|---|---|---|---|---|---|---|---|---|---|
| 0-A (3,1) | 0 D | 1 D | 2 D | 3 aD | 4 aD | 5 aD | 6 aD | 7 aD | 8 aD | 9 aD | 10 aD | 11 aD | | 11 U |
| 0-B (3,3) | 0 D | 1 D | 2 D | 3 aD | 4 aD | 5 aD | 6 aD | 7 aD | 8 aD | 9 aD | | 9 U | 10 U | 11 U |
| 0-C (3,5) | 0 D | 1 D | 2 D | 3 aD | 4 aD | 5 aD | 6 aD | 7 aD | 7 U | 8 U | 9 U | 10 U | | 11 U |
| 1-A (9,1) | 0 D | 1 D | 2 D | 3 D | 4 D | 5 D | 6 D | 7 D | 8 D | 9 aD | 10 aD | 11 aD | | 11 U |
| 1-B (9,3) | 0 D | 1 D | 2 D | 3 D | 4 D | 5 D | 6 D | 7 D | 8 D | 9 aD | | 9 U | 10 U | 11 U |
| 2-A (10,1) | 0 D | 1 D | 2 D | 3 D | 4 D | 5 D | 6 D | 7 D | 8 D | 9 D | 10 aD | 11 aD | | 11 U |
| 2-B (10,3) | 0 D | 1 D | 2 D | 3 D | 4 D | 5 D | 6 D | 7 D | 8 D | 9 D | | 9 U | 10 U | 11 U |
| 3-A (11,1) | 0 D | 1 D | 2 D | 3 D | 4 D | 5 D | 6 D | 7 D | 8 D | 9 D | 10 D | 11 aD | | 11 U |
| 4-A (12,1) | 0 D | 1 D | 2 D | 3 D | 4 D | 5 D | 6 D | 7 D | 8 D | 9 D | 10 D | 11 D | | 11 U |
| 5-A (3,2) | 0 D | 1 D | 2 D | 3 aD | 4 aD | 5 aD | 6 aD | 7 aD | 8 aD | 9 aD | 10 aD | | 10 U | 11 U |
| 5-B (3,4) | 0 D | 1 D | 2 D | 3 aD | 4 aD | 5 aD | 6 aD | 7 aD | 8 aD | 8 U | 9 U | 10 U | | 11 U |
| 5-C (3,6) | 0 D | 1 D | 2 D | 3 aD | 4 aD | 5 aD | 6 aD | 6 U | 7 U | 8 U | 9 U | 10 U | | 11 U |
| 6-A (9,2) | 0 D | 1 D | 2 D | 3 D | 4 D | 5 D | 6 D | 7 D | 8 D | 9 aD | 10 aD | | 10 U | 11 U |
| 6-A (9,4) | 0 D | 1 D | 2 D | 3 D | 4 D | 5 D | 6 D | 7 D | 8 D | 8 U | 9 U | 10 U | | 11 U |
| 7-A (10,2) | 0 D | 1 D | 2 D | 3 D | 4 D | 5 D | 6 D | 7 D | 8 D | 9 D | 10 aD | | 10 U | 11 U |
| 8-A (11,2) | 0 D | 1 D | 2 D | 3 D | 4 D | 5 D | 6 D | 7 D | 8 D | 9 D | 10 D | | 10 U | 11 U |
| 9-A (6,2) | 0 D | 1 D | 2 D | 3 D | 4 D | 5 D | 6 aD | 7 aD | 8 aD | 9 aD | 10 aD | | 10 U | 11 U |
| 9-B (6,4) | 0 D | 1 D | 2 D | 3 D | 4 D | 5 D | 6 aD | 7 aD | 8 aD | 8 U | 9 U | 10 U | | 11 U |
| 9-C (6,6) | 0 D | 1 D | 2 D | 3 D | 4 D | 5 D | 6 U | 7 U | 8 U | 9 U | 10 U | | 11 U |

# FIG. 24

Special subframe (1ms)

# FIG. 25

Special subframe (1ms)

| | 0 | 1 | 2 | 3 | 4 | 5 | 6 | 7 | 8 | 9 | 10 | 11 |
|---|---|---|---|---|---|---|---|---|---|---|---|---|
| 0-A (3,1) | D | D | D | aD | aD | aD | aD | | aU | aU | aU | aU | U |
| 0-B (3,3) | D | D | D | aD | aD | aD | aD | | aU | aU | U | U | U |
| 0-C (3,5) | D | D | D | aD | aD | aD | | aU | U | U | U | U | U |
| 1-A (9,1) | D | D | D | D | D | D | D | D | D | aD | aD | | aU | U |
| 1-B (9,3) | D | D | D | D | D | D | D | D | D | aD | | U | U | U |
| 2-A (10,1) | D | D | D | D | D | D | D | D | D | D | aD | | aU | U |
| 2-B (10,3) | D | D | D | D | D | D | D | D | D | D | | U | U | U |
| 3-A (11,1) | D | D | D | D | D | D | D | D | D | D | D | aD | | U | U |
| 4-A (12,1) | D | D | D | D | D | D | D | D | D | D | D | D | | U | U |
| 5-A (3,2) | D | D | D | aD | aD | aD | aD | | aU | aU | aU | U | U |
| 5-B (3,4) | D | D | D | aD | aD | aD | aD | | aU | U | U | U | U |
| 5-C (3,6) | D | D | D | aD | aD | | aU | U | U | U | U | U |
| 6-A (9,2) | D | D | D | D | D | D | D | D | D | aD | | aU | U | U |
| 6-A (9,4) | D | D | D | D | D | D | D | D | D | | U | U | U |
| 7-A (10,2) | D | D | D | D | D | D | D | D | D | D | aD | | U | U |
| 8-A (11,2) | D | D | D | D | D | D | D | D | D | D | D | | U | U |
| 9-A (6,2) | D | D | D | D | D | D | aD | | aU | aU | aU | U | U |
| 9-B (6,4) | D | D | D | D | D | D | aU | | aU | U | U | U | U |
| 9-C (6,6) | D | D | D | D | D | D | | U | U | U | U | U |

# FIG. 26

Special subframe (1ms)

# FIG. 27

Special subframe (1ms)

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0-A (3,1) | D | D | D | | aU | aU | aU | aU | aU | aU | aU | aU | aU | U |
| 0-B (3,3) | D | D | D | | aU | aU | aU | aU | aU | aU | aU | U | U | U |
| 0-C (3,5) | D | D | D | | aU | aU | aU | aU | aU | U | U | U | U | U |
| 1-A (8,1) | D | D | D | D | D | D | D | D | | | aU | aU | aU | U |
| 1-B (8,3) | D | D | D | D | D | D | D | D | | | aU | U | U | U |
| 2-A (9,1) | D | D | D | D | D | D | D | D | D | | | aU | aU | U |
| 3-A (10,1) | D | D | D | D | D | D | D | D | D | | D | U | aU | U |
| 4-A (3,2) | D | D | D | | aU | aU | aU | aU | aU | aU | aU | aU | U | U |
| 4-B (3,4) | D | D | D | | aU | aU | aU | aU | aU | aU | U | U | U | U |
| 4-C (3,6) | D | D | D | | aU | aU | aU | aU | U | U | U | U | U | U |
| 5-A (8,2) | D | D | D | D | D | D | D | D | | | aU | aU | U | U |
| 6-A (9,2) | D | D | D | D | D | D | D | D | D | | | aU | U | U |
| 7-A (5,2) | D | D | D | D | D | | aU | aU | aU | aU | aU | aU | U | U |
| 7-B (5,4) | D | D | D | D | D | | aU | aU | aU | aU | U | U | U | U |
| 7-C (5,6) | D | D | D | D | D | | aU | aU | U | U | U | U | U | U |

EP 3 584 988 B1

# FIG. 28

56

# FIG. 29

Special subframe (1ms)

# FIG. 30

# FIG. 31

Special subframe (1ms)

# FIG. 32

# FIG. 33

UE(1)                                    BS(100)

Transmit first allocation information (S3310)

Transmit second allocation information (S3320)

Performs signal transmission/reception through
resources allocated by the first allocation information
(or by both the first allocation information and second
allocation information) (S3330)

FIG. 34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016131352 A1

**Non-patent literature cited in the description**

- Cell range extension. *3GPP Draft No. R1-1702118*

- Clarification of antenna port usage of NB-IoT. *3GPP Draft No. R1-164917*